(19) Europäisches Patentamt
European Patent Office
Office européen des brevets

(11) **EP 3 125 527 A1**

(12) **EUROPEAN PATENT APPLICATION**
published in accordance with Art. 153(4) EPC

(43) Date of publication:
**01.02.2017 Bulletin 2017/05**

(51) Int Cl.:
***H04N 5/232*** (2006.01)   ***G06T 5/00*** (2006.01)
***G06T 5/20*** (2006.01)   ***H04N 1/409*** (2006.01)

(21) Application number: **15768633.8**

(22) Date of filing: **18.02.2015**

(86) International application number:
**PCT/JP2015/054407**

(87) International publication number:
**WO 2015/146380 (01.10.2015 Gazette 2015/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.03.2014 JP 2014068422**

(71) Applicant: **FUJIFILM Corporation
Tokyo 106-8620 (JP)**

(72) Inventors:
• **IRIE Kosuke
Saitama-shi
Saitama 331-9624 (JP)**

• **NARUSE Yousuke
Saitama-shi
Saitama 331-9624 (JP)**
• **HAYASHI Kenkichi
Saitama-shi
Saitama 331-9624 (JP)**

(74) Representative: **Hoffmann Eitle
Patent- und Rechtsanwälte PartmbB
Arabellastraße 30
81925 München (DE)**

(54) **IMAGE PROCESSING DEVICE, PHOTOGRAPHY DEVICE, IMAGE PROCESSING METHOD, AND IMAGE PROCESSING PROGRAM**

(57)    There are provided an image processing device, an imaging device, an image processing method, and an image processing program capable of satisfactorily restoring degraded images in a focus region and a quasi-focus region due to the point spread function (PSF) of an optical system. There is provided an image processing device that acquires restored image data by performing restoration processing using a restoration filter based on the PSF of an optical system for original image data acquired by capturing a subject image using the optical system. This device includes a restoration processing unit 38 that performs restoration processing by applying the restoration filter to the original image data, a quasi-focus region detection unit 50 that detects a quasi-focus region in an original image corresponding to the original image data, and a sharpness restoration control unit 37. The sharpness restoration control unit adjusts the restoration strength magnification U for original image data of the detected quasi-focus region so as to be smaller than the restoration strength magnification U for original image data of at least a focus region.

FIG. 4

**Description**

**BACKGROUND OF THE INVENTION**

1. Field of the Invention

The present invention relates to an image processing device, an imaging device, an image processing method, and an image processing program, and in particular, relates to a method of adjusting the restoration strength according to a focusing situation or a method of adjusting the restoration strength and the sharpening strength.

2. Description of the Related Art

In a subject image captured through an optical system, a point spread phenomenon may be observed in which a point subject has a very small spread due to the influence of diffraction, aberration, or the like caused by the optical system. A function showing a response to a point light source of the optical system is called a point spread function (PSF), and is known as a parameter affecting the resolution degradation (blur) of a captured image.

In a captured image having an image quality that has been degraded due to the point spread phenomenon, it is possible to recover the image quality by performing point image restoration processing based on the PSF. Point image restoration processing is a process of calculating the degradation characteristics (point image characteristics) due to the aberration of a lens (optical system) in advance and canceling out or reducing the point spread of a captured image by image processing using a restoration filter (recovery filter) corresponding to the point image characteristics.

If imaging conditions, such as a F number or a focal length, are changed, the PSF is changed. Therefore, it is preferable to change a restoration filter used in the point image restoration processing whenever the imaging conditions are changed or a lens is replaced and to perform the point image restoration processing using the restoration filter corresponding to the new imaging conditions or the newly attached lens.

As a representative example of the restoration filter that can be used in the point image restoration processing, a Wiener filter is known. The point image restoration processing using the Wiener filter is a process that is determined mathematically uniquely if the optical transfer function (OTF) of the lens and the imaging system signal-noise ratio (SN ratio) that depends on a frequency are determined.

In addition to the point image restoration processing, image processing for improving the image quality may be performed. For example, it is possible to improve the sharpness of an image by sharpening processing (outline enhancement processing, edge enhancement processing, sharpness enhancement processing, and the like).

As a specific processing method regarding the point image restoration processing and the sharpening processing described above, for example, JP2011-123589A discloses image processing in which phase degradation components are restored using an image restoration filter, which reduces only phase degradation components of the phase degradation components and amplitude degradation components, as an image restoration filter that is generated or selected based on the optical transfer function of the imaging system and in which amplitude degradation components are restored using an edge enhancement filter for reducing the amplitude degradation components.

Thus, by the image restoration filter generated or selected based on the optical transfer function of the imaging system, only the phase degradation components are restored, but the amplitude degradation components are not restored. This is because noise components are significantly amplified along with restoration of the degraded image if an image restoration filter generated by taking the complete reciprocal of the optical transfer function is used, adverse effects, such as ringing, occur as artifacts in the restored image in a case where noise is not acceptable for desired image quality, and color change (false colors) occurs in the restored image if the degree of restoration for each of color components of red (R), green (G), and blue (B) is different from that assumed. On the other hand, since the edge enhancement filter for reducing amplitude degradation components emphasizes only an edge portion, it is possible to suppress noise amplification in portions other than the edge.

JP2011-23823A discloses an image processing device that extracts a subject region having a range, in which the amount of defocus is the smallest, as a blur removable region and performs blur elimination for the image data of the extracted region using a blur elimination filter. Accordingly, since the computation load of blur elimination processing is reduced, it is possible to perform restoration processing in a short period of time. In addition, since the blur elimination processing is not performed for image data of other than the extracted region, an image after blur elimination is not degraded by over-restoration.

JP2006-129236A discloses changing the strength of a restoration filter itself according to the edge strength by selecting filters having different restoration strengths according to the edge strength.

**SUMMARY OF THE INVENTION**

Depending on the imaging scene (subject) or the imaging conditions, artifacts (ringing or the like) may be generated in the image due to the point image restoration processing. Therefore, in order to prevent the degradation of image quality, such as artifacts, there is a case where the restoration strength of the point image restoration processing should be weakened. Artifacts should not appear in the point image restoration processing under the ideal conditions. In actual processing, however, the frequency characteristics of the input image may be incorrect due to individual variations in lenses or sensors, non-linear characteristics of signal processing before the point image restoration processing, and the like. As a result, artifacts may be generated.

As one of such phenomena, if the point image restoration processing is applied to an image region deviating from the focus region, an adverse effect that image quality is degraded may occur.

In a complete defocus region, an image is greatly blurred. Accordingly, since only low-frequency components are left, point image restoration has little influence. For this reason, no adverse effect is likely to occur. In addition, it is relatively easy to extract the complete defocus region from the image data.

On the other hand, the present inventors have found out through intensive study that an adverse effect that artifacts, such as noise, become noticeable occurs if the same point image restoration processing as for the image of the focus region is performed on an image of a region (quasi-focus region) at a point slightly in front or behind the focus region. In addition, determining how large a quasi-focus region, in which such an adverse effect is likely to occur, is and extracting the quasi-focus region from the image data has not been considered conventionally.

JP2011-123589A discloses that, when restoration processing is performed on an image of a region where defocus occurs using an image restoration filter for restoring amplitude degradation due to the imaging optical system, false color is generated due to a change in the color of an edge portion. In addition, although the device disclosed in JP2011-123589A performs image processing using an image restoration filter for restoring phase degradation components and image processing using an edge enhancement filter, restoration processing according to the state of defocus is not performed. In addition, in JP2011-123589A, there is neither description nor suggestion about adjusting the degree of image restoration and the degree of edge enhancement by correlating both the image processes.

The device disclosed in JP2011-23823A extracts a subject region having a range, in which the amount of defocus is the smallest, as a blur removable region and performs blur elimination for the image data of the extracted region using a blur elimination filter. However, there is a problem that blur elimination using the blur elimination filter is not performed for an image of a region (quasi-focus region) at a point slightly in front or behind the range where the amount of defocus is the smallest (focus region). In addition, neither a problem that noise becomes noticeable when the same blur elimination processing as for the image of the focus region is performed on the image of the quasi-focus region nor a solution for this is disclosed in JP2011-23823A.

In addition, JP2006-129236A discloses that an image is restored using a restoration filter with a large restoration strength when restoring a pixel with a large edge strength since the ringing of a restored image corresponding thereto is not noticeable and that an image is restored using a restoration filter with a small restoration strength when restoring a pixel with a small edge strength since the ringing of a restored image corresponding thereto is noticeable. However, there is no description of using restoration filters having different restoration strengths according to the focus state of pixels in the image.

The present invention has been made in view of the aforementioned situation, and it is an object of the present invention to provide an image processing device, an imaging device, an image processing method, and an image processing program capable of stably improving the image quality without excessively changing image sharpness by satisfactorily restoring a degraded image in a focus region and a quasi-focus region due to the PSF of an optical system.

In order to achive the aforementioned object, an invention according to an aspect of the present invention is an image processing device that acquires restored image data by performing restoration processing using a restoration filter based on a point spread function of an optical system for original image data acquired by capturing a subject image using the optical system. The image processing device comprises: a restoration processing unit that performs the restoration processing by applying the restoration filter to the original image data; a sharpness restoration control unit that is able to adjust a restoration rate of the original image data according to the restoration processing by controlling the restoration processing unit; and a quasi-focus region detection unit that detects a quasi-focus region in an original image corresponding to the original image data. The sharpness restoration control unit adjusts the restoration rate for original image data of the quasi-focus region so as to be smaller than a restoration rate for original image data of at least a focus region.

According to the aspect of the present invention, a quasi-focus region in the original image is detected, and the restoration rate for the original image data of the detected quasi-focus region is adjusted so as to be smaller than the restoration rate for the original image data of at least the focus region. Therefore, it is possible to perform restoration processing for the original image data of the quasi-focus region. In addition, by making the restoration strength for the original image data of the quasi-focus region weaker than the restoration strength for the original image data of the focus region, it is possible to prevent the over-correction of the original image data of the quasi-focus region. For the adjustment of the restoration rate, a method of adjusting the restoration rate by gain-controlling increment or decrement data due to restoration processing, a method of adjusting the restoration rate by limiting the increment or decrement data using a clip threshold value, or a method of adjusting the restoration rate by selecting a restoration filter having an appropriate restoration strength from restoration filters having different restoration strengths can be considered. The "restoration filter based on the point spread function" is a restoration filter based on an inverse filter, a Wiener filter, or the like generated using a point spread function (PSF) of the optical system, and the "restoration processing" includes processing for applying such a restoration filter to image data. The "point spread function" is a function showing a response to a point light source of the optical system, and can be expressed based on the PSF, an OTF (modulation transfer function (MTF)), and a phase transfer function (PTF).

In the image processing device according to another aspect of the present invention, it is preferable that the sharpness restoration control unit continuously changes a restoration rate of a boundary between the focus region and the quasi-focus region when adjusting the restoration rate for the original image data of the quasi-focus region. Therefore, it is possible to prevent the occurrence of a restoration strength difference in the image of the boundary between the focus region and the quasi-focus region. In addition, the restoration rate of the boundary between the quasi-focus region and the defocus region may also be changed continuously. In the image of the boundary, however, the amount of blur may be large and a restoration strength difference may not be noticeable. Accordingly, the restoration rate may not be changed continuously.

In the image processing device according to still another aspect of the present invention, it is preferable that the quasi-focus region detection unit includes a first defocus amount detection unit that detects a defocus amount of a quasi-focus region in the original image data and that the sharpness restoration control unit adjusts the restoration rate for the original image data of the quasi-focus region according to the defocus amount detected by the first defocus amount detection unit. Therefore, by adjusting the restoration rate for the original image data of the quasi-focus region according to the magnitude of the defocus amount in the quasi-focus region, it is possible to continuously adjust the restoration strength of the quasi-focus region ranging from the focus region to the defocus region.

Preferably, the image processing device according to still another aspect of the present invention further comprises a sharpening processing unit that performs sharpening processing using a sharpening filter for the original image data, and the sharpness restoration control unit adjusts a restoration rate of original image data of the quasi-focus region according to the restoration processing and a sharpening rate of original image data of the quasi-focus region according to the sharpening processing by controlling the restoration processing unit and the sharpening processing unit. Therefore, in a case where the restoration rate of the original image data of the quasi-focus region according to the restoration processing is set to be small, for example, the sharpening rate of the original image data of the quasi-focus region according to the sharpening processing can be set to be larger than that for the original image data of the focus region. Thus, it is possible to adjust the total sharpness restoration rate based on the restoration rate and the sharpening rate. On the other hand, as the "sharpening filter", it is possible to use filters other than a "filter (restoration filter) generated using an inverse filter or a Wiener filter from the point spread function (PSF) of the optical system". Accordingly, as the "sharpening filter", for example, a filter that is not based on the point spread function of the optical system can be appropriately used. A filter calculated based on other elements (parameters) other than the point spread function can be adopted as the "sharpening filter". As the sharpening filter that is not based on the point spread function, a filter that is switchable according to a F number having a different point spread function or the like can be adopted as a sharpening filter if the filter is a filter created without depending on the point spread function. Similarly, a filter that is switchable according to the image height having a different point spread function can be adopted as a sharpening filter. The strength (gain) of the sharpening filter in the sharpening processing may be changed according to the F number or the image height.

The "sharpening processing" is processing for compensating for or emphasizing high frequency components of image data, and is processing for emphasizing outline components of the image. Accordingly, for example, processing called outline enhancement processing, edge enhancement processing, or sharpness enhancement processing is included in the "sharpening processing" referred to herein. In addition, the restoration filter and the sharpening filter can be formed as a finite impulse response (FIR) filter.

In the image processing device according to still another aspect of the present invention, it is preferable that the sharpness restoration control unit calculates, from a total sharpness restoration rate based on the restoration rate and the sharpening rate and one of the restoration rate and the sharpening rate, the other one of the restoration rate and the sharpening rate. Therefore, it is possible to calculate the restoration rate or the sharpening rate for keeping the total sharpness restoration rate constant. In addition, since the restoration rate and the sharpening rate are determined based on the total sharpness restoration rate, the sharpening rate is adjusted according to the change in the restoration rate, or the restoration rate is adjusted according to the change in the sharpening rate. Accordingly, it is possible to stably improve the image quality of image data without excessively changing the restoration strength of the restoration processing and the sharpening strength of the sharpening processing.

In the image processing device according to still another aspect of the present invention, it is preferable that, when adjusting the restoration rate and the sharpening rate for the original image data of the quasi-focus region, the sharpness restoration control unit continuously changes a restoration rate and a sharpening rate of a boundary between the focus region and the quasi-focus region. Therefore, it is possible to prevent the occurrence of a restoration strength difference and a sharpening strength difference in the image of the boundary between the focus region and the quasi-focus region.

In the image processing device according to still another aspect of the present invention, it is preferable that the quasi-focus region detection unit includes a first defocus amount detection unit that detects a defocus amount of a quasi-focus region in the original image data and that the sharpness restoration control unit adjusts the restoration rate and the sharpening rate for the original image data of the quasi-focus region according to the defocus amount detected by the first defocus amount detection unit. Therefore, by adjusting the restoration rate and the sharpening rate for the original image data of the quasi-focus region according to the magnitude of the defocus amount in the quasi-focus region, it is possible to continuously adjust the restoration strength and the sharpening strength of the quasi-focus region ranging from the focus region to the defocus region.

In the image processing device according to still another aspect of the present invention, it is preferable that the original image data is video data including a plurality of frames and that, when adjusting the restoration rate for each of pieces of original image data forming the video data, the sharpness restoration control unit adjusts the restoration rate according to imaging conditions of a previous frame or a subsequent frame with respect to original image data to be processed. Therefore, even in a case where there is an "abrupt change in the imaging environment", it is possible to acquire a good-quality video while maintaining the continuity of restoration processing between frames.

In the image processing device according to still another aspect of the present invention, the optical system is a replaceable lens that is replaceably attached to an imaging body in which an imaging element, from which the original image data is read out, is mounted.

In the image processing device according to still another aspect of the present invention, it is preferable that the sharpness restoration control unit acquires optical characteristics information of the replaceable lens from the mounted replaceable lens. Optical characteristics information includes a restoration filter, lens type information, or individual differences information of a lens. Since it is possible to determine the restoration rate according to the optical characteristics of the replaceable lens, it is possible to determine the appropriate restoration rate even in a case where the optical characteristics information changes depending on the type of the replaceable lens.

In the image processing device according to still another aspect of the present invention, the quasi-focus region detection unit includes a frequency component extraction unit that extracts a specific frequency component corresponding to quasi-focus or frequency components near the specific frequency including the specific frequency, for each separate region in the original image, based on the original image data, and detects a quasi-focus region in the original image based on a magnitude of the frequency component extracted for each separate region in the original image. There is a correlation between the magnitude of the response of a specific frequency band, in which over-correction by the restoration filter is noticeable, and the image data of the quasi-focus region. Therefore, a specific frequency component or frequency components near the specific frequency including the specific frequency are extracted for each separate region in the original image, and a quasi-focus region in the original image is detected based on the magnitude of the extracted frequency components.

In the image processing device according to still another aspect of the present invention, it is preferable that the frequency component extraction unit includes an edge portion detection unit that detects an edge portion in the separate region for each separate region in the original image and extracts a specific frequency component corresponding to quasi-focus or frequency components near the specific frequency component including the specific frequency, for each separate region in the original image, based on original image data of the detected edge portion. This is because appropriate frequency components corresponding to the quasi-focus region cannot be extracted from a portion where there is no edge portion.

In the image processing device according to still another aspect of the present invention, it is preferable that, assuming that a sampling frequency of the original image data is $fs$, the frequency component extraction unit extracts a frequency component in a range of 0.05 fs to 0.25 fs for each separate region in the original image and that, assuming that a response of a focus region is 1, the quasi-focus region detection unit detects a quasi-focus region in the original image according to whether or not a magnitude of the frequency component extracted for each separate region in the original image falls within a range between a lower limit and an upper limit corresponding to responses of 0.2 and 0.7, respectively.

The image processing device according to still another aspect of the present invention further comprises an acquisition unit that acquires a subject distance for each separate region in an original image corresponding to the original image data and imaging conditions at the time of imaging of the original image data, and the quasi-focus region detection unit detects a quasi-focus region in the original image based on the acquired subject distance for each region in an imaging range and a depth of field determined by the acquired imaging conditions. The depth of field is determined by the imaging conditions (a focal length, a F number, an imaging distance, and an allowed circle of confusion) at the time of imaging. A region corresponding to the subject distance within the depth of field determined in this manner is a focus region, and a region corresponding to the range of a predetermined subject distance in front of and behind the depth of field is detected as a quasi-focus region. For example, a range of twice the rear depth of field and twice the front depth of field can be set as the range of a predetermined subject distance. However, the range of a predetermined subject distance is not limited thereto.

An imaging device according to still another aspect of the present invention comprises: the image processing device described above; an imaging unit that acquires the original image data by capturing a subject image using the optical system; and a second defocus amount detection unit that detects defocus amounts of all regions in an imaging range of the imaging unit. It is preferable that the quasi-focus region detection unit detects a quasi-focus region in the original image based on the defocus amounts of all regions in the imaging range detected by the second defocus amount detection unit. The defocus amount (the amount of defocus) of the focus region is zero or approximately zero, and there is a correlation between the defocus amount and the focus state. Therefore, by detecting the defocus amounts of all regions in the imaging range, a region corresponding to a range for which the absolute value of the detected defocus amount is larger than the absolute value of the defocus amount of the focus region and is smaller than the absolute value of the defocus amount of the defocus region can be detected as a quasi-focus region.

An imaging device according to still another aspect of the present invention is configured to comprise the image processing device described above.

An invention according to still another aspect of the present invention is an image processing method of acquiring restored image data by performing restoration processing using a restoration filter based on a point spread function of an optical system for original image data acquired by capturing a subject image using the optical system. The image processing method includes: a step of performing the restoration processing by applying the restoration filter to the original image data; a step of adjusting a restoration rate of the original image data according to the restoration processing; and a step of detecting a quasi-focus region in an original image corresponding to the original image data. In the step of adjusting the restoration rate, the restoration rate for original image data of the quasi-focus region is adjusted so as to be smaller than a restoration rate for original image data of at least a focus region.

An invention according to still another aspect of the present invention is an image processing program for acquiring restored image data by performing restoration processing using a restoration filter based on a point spread function of an optical system for original image data acquired by capturing a subject image using the optical system. The image processing program causes a computer to execute: a step of performing the restoration processing by applying the restoration filter to the original image data; a step of detecting a quasi-focus region in an original image corresponding to the original image data; and a step of adjusting a restoration rate of the original image data according to the restoration processing, which is a step of adjusting the restoration rate for original image data of the detected quasi-focus region so as to be smaller than a restoration rate for original image data of at least a focus region.

According to the present invention, a quasi-focus region in the original image is detected, and the restoration rate for the original image data of the detected quasi-focus region is adjusted so as to be smaller than the restoration rate for the original image data of at least the focus region. Therefore, it is possible to prevent over-correction due to the restoration processing for the original image data of the quasi-focus region and to improve the image quality of the original image data of the quasi-focus region.

**BRIEF DESCRIPTION OF THE DRAWINGS**

Fig. 1 is a block diagram showing a digital camera connected to a computer.

Fig. 2 is a block diagram showing an example of the configuration of a body controller.

Fig. 3 is a block diagram showing an example of the configuration of an image processing unit, and in particular, shows the configuration relevant to point image restoration processing.

Fig. 4 is a diagram showing the configuration of a processing block that performs point image restoration processing according to a first embodiment.

Fig. 5 is a diagram showing an example of an image obtained by imaging a subject for which the subject distance changes continuously.

Figs. 6A to 6C are enlarged views of images of a focus region, a quasi-focus region, and a defocus region in the image shown in Fig. 5.

Fig. 7 is a graph showing the relationship between a sampling frequency [fs] and a response [SFR] that is obtained from each image obtained by performing imaging while shifting the ISO resolution chart sequentially from the focus position by manual focusing.

Fig. 8 is a block diagram showing a first embodiment of a quasi-focus region detection unit that detects a quasi-focus region.

Fig. 9 is a graph showing the relationship between the response [SFR] and output values of a band pass filter (BPF1) and a narrow band pass filter (BPF2).

Fig. 10 is a diagram showing an aspect of determining a quasi-focus region based on a sum value D of the output of the band pass filter (BPF1).

Fig. 11 is a diagram showing an example of comparison between the point image restoration processing according to the present invention and point image restoration processing based on other methods.

Fig. 12 is a diagram showing a variation of the adjustment of a restoration rate (restoration strength magnification U) for the original image data of a quasi-focus region by an automatic strength adjustment unit.

Fig. 13 is a diagram showing an original image divided into 64 (8 x 8) separate regions.

Fig. 14 is a diagram showing an example of the AF evaluation value acquired for each separate region of the original image.

Fig. 15 is a diagram showing the relationship between the image positions of eight separate regions $A_{14}$ to $A_{84}$ shown in Fig. 13 and the subject distances of the respective subjects of the separate regions $A_{14}$ to $A_{84}$.

Fig. 16 is a graph showing the relationship between quasi-focus regions A and C and a focus region B and subject distances corresponding thereto.

Fig. 17 is a block diagram of a quasi-focus region detection unit that detects a quasi-focus region corresponding to the definition 2 of quasi-focus.

Figs. 18A and 18B are diagrams showing examples of the configuration of a phase difference pixel.

Fig. 19 is a block diagram of a quasi-focus region detection unit that detects a quasi-focus region corresponding to the definition 3 of quasi-focus.

Fig. 20 is a block diagram showing an example of the configuration of an image processing unit, and in particular, shows the configuration relevant to point image restoration processing and sharpening processing.

Fig. 21 is a conceptual diagram illustrating the adjustment of the point image restoration strength and the sharpening strength.

Fig. 22 is a diagram showing the configuration of a processing block that performs point image restoration processing and sharpening processing according to a second embodiment.

Fig. 23 is a diagram showing the configuration of a processing block that performs point image restoration processing and sharpening processing according to a third embodiment.

Fig. 24 is a diagram showing the configuration of a processing block that performs point image restoration processing and sharpening processing according to a fourth embodiment.

Figs. 25A to 25C are diagrams illustrating the frequency characteristics of image processing, where Fig. 25A shows an example of the "frequency-gain" relationship in the point image restoration processing (point image restoration filter processing unit), Fig. 25B shows an example of the "frequency-gain" relationship in the sharpening processing (outline enhancement filter processing unit), and Fig. 25C shows an example of the "frequency-gain" relationship in both of the sharpening processing and the point image restoration processing.

Fig. 26 is a diagram showing the configuration of a processing block that performs point image restoration processing and sharpening processing according to a fifth embodiment.

Fig. 27 is a diagram showing the configuration of a processing block that performs point image restoration processing and sharpening processing according to a sixth embodiment.

Fig. 28 is a diagram showing the configuration of a processing block that performs point image restoration processing and sharpening processing according to a seventh embodiment.

Fig. 29 is a diagram illustrating examples of a processing target frame and a reference frame.

Fig. 30 is a diagram illustrating an example of adjustment of the details of restoration processing performed by a restoration adjusting unit.

Fig. 31 is a diagram illustrating an example of adjustment of the details of restoration processing performed by a restoration adjusting unit.

Fig. 32 is a diagram showing the operation flow of the restoration adjusting unit in the case of determining a mode.

Fig. 33 is a diagram showing the configuration of a processing block that performs point image restoration processing and sharpening processing according to an eighth embodiment.

Fig. 34 is a diagram showing the configuration of a processing block that performs point image restoration processing and sharpening processing according to a ninth embodiment.

Fig. 35 is a diagram showing the configuration of a processing block that performs point image restoration processing and sharpening processing according to a modification example.

Fig. 36 is a diagram showing the appearance of a smartphone.

Fig. 37 is a block diagram showing the configuration of the smartphone shown in Fig. 36.

**DESCRIPTION OF THE PREFERRED EMBODIMENTS**

Embodiments of the present invention will be described with reference to the accompanying diagrams. In the following embodiments, a case where the present invention is applied to a digital camera (imaging device) connectable to a computer (personal computer (PC)) will be described as an example.

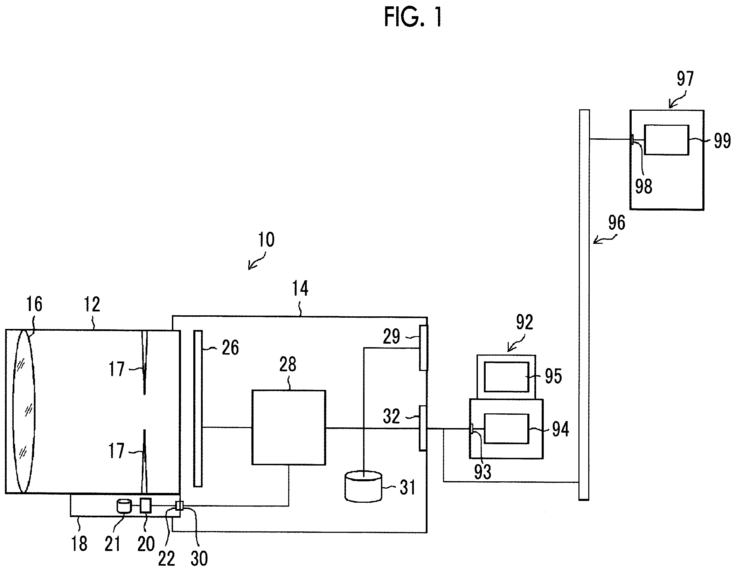

Fig. 1 is a block diagram showing a digital camera connected to a computer. In a digital camera 10 in this example, a lens unit (optical system) 12 is replaceably attached to a camera body (imaging body) 14 in which an imaging element 26 is mounted, and an image processing device is provided in the camera body 14.

That is, the digital camera 10 includes the lens unit 12, which is a replaceable lens, and the camera body 14 including the imaging element 26, and the lens unit 12 and the imaging element 26 form an imaging unit of the digital camera 10. The lens unit 12 and the camera body 14 are electrically connected to each other through a lens unit input and output unit 22 of the lens unit 12 and a camera body input and output unit 30 of the camera body 14.

The lens unit 12 includes a lens 16 and a diaphragm 17 (optical system) and an optical system operation unit 18 that controls the optical system. The optical system operation unit 18 includes a lens unit controller 20 connected to the lens unit input and output unit 22, a lens unit storage unit 21 that stores various kinds of information (optical system information or the like), and an actuator (not shown) for operating the optical system. The lens unit controller 20 controls the optical system through the actuator based on a control signal transmitted through the lens unit input and output unit 22 from the camera body 14. For example, the lens unit controller 20 performs focus control or zoom control by lens movement, control of the amount of diaphragm of the diaphragm 17, and the like. In addition, the lens unit controller 20 reads various kinds of information stored in the lens unit storage unit 21 based on the control signal transmitted through the lens unit input and output unit 22 from the camera body 14, and transmits the information to the camera body 14 (body controller 28).

The imaging element 26 of the camera body 14 includes a condensing microlens, color filters of red (R), green (G), and blue (B), and image sensors (photodiodes; a complementary metal oxide semiconductor (CMOS), a charge coupled device (CCD), and the like). The imaging element 26 converts light of a subject image, which is emitted through the optical system (the lens 16, the diaphragm 17, and the like) of the lens unit 12, into an electrical signal, and transmits an image signal (original image data) to the body controller 28.

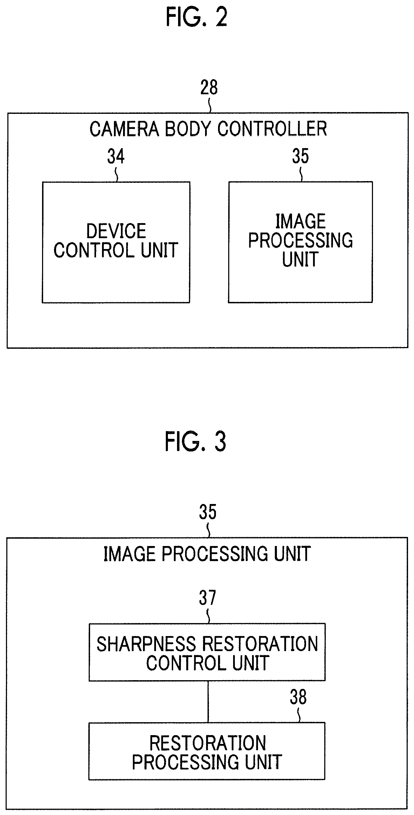

Although the details of the body controller 28 will be described later (refer to Fig. 2), the body controller 28 has a function as a device control unit that performs overall control of each unit of the digital camera 10 and a function as an image processing unit that performs image processing of image data transmitted from the imaging element 26.

The digital camera 10 further includes other devices (shutter and the like) required for imaging or the like, and some of the devices form a user interface 29 that can be checked and operated by the user. The user interface 29 can be disposed in the lens unit 12 and/or the camera body 14. In the example shown in Fig. 1, the user interface 29 is provided in the camera body 14. Through the user interface 29, the user can determine and change various settings (exposure value (EV) value and the like) for imaging or the like, give an imaging instruction, check a live view image and a captured image, and the like. The user interface 29 is connected to the body controller 28, and various setting determined and changed by the user and various instructions are reflected in various processes (device control processing, image processing, or the like) in the body controller 28.

Image data subjected to the image processing in the body controller 28 is stored in a main body storage unit 31 provided in the camera body 14, and is transmitted to a computer 92 or the like through an input and output interface 32 when necessary. The main body storage unit 31 is formed by an arbitrary memory body, and a replaceable memory, such as a memory card, is appropriately used. The format of the image data output from the body controller 28 is not particularly limited, and can be any format, such as RAW, joint photographic experts group (JPEG), and tagged image file format (TIFF). The body controller 28 may form header information (imaging information (imaging date and time, a model, the number of pixels, a F number, and the like)) and a plurality of pieces of associated data, such as main image data and thumbnail image data, as one image file so as to be associated with each other as a so-called exchangeable image file format (Exif), and output the image file.

The computer 92 is connected to the digital camera 10 through the input and output interface 32 of the camera body 14 and a computer input and output unit 93, and receives data, such as the image data transmitted from the camera body 14. A computer controller 94 performs overall control of the computer 92, performs image processing on the image data from the digital camera 10, and controls communication with a server 97 or the like connected to the computer input and output unit 93 through a network line, such as the Internet 96. The computer 92 includes a display 95, and the content of processing in the computer controller 94 or the like is displayed on the display 95 when necessary. The user can input data or a command to the computer controller 94 by operating input means (not shown), such as a keyboard, while checking the display of the display 95. Therefore, the user can control the computer 92 or devices (the digital camera 10 and the server 97) connected to the computer 92.

The server 97 includes a sever input and output unit 98 and a server controller 99. The sever input and output unit 98 forms a connection unit for transmission and reception of signals to and from an external device, such as the computer 92, and is connected to the computer input and output unit 93 of the computer 92 through a network line, such as the Internet 96. In response to the control signal from the computer 92, the server controller 99 transmits and receives data to and from the computer controller 94, when necessary, in cooperation with the computer controller 94, downloads the data to the computer 92, performs arithmetic processing, and transmits the calculation result to the computer 92.

Each controller (the lens unit controller 20, the body controller 28, the computer controller 94, and the server controller 99) includes circuits required for control processing, for example, a central processing unit (CPU) or a memory. Communication between the digital camera 10, the computer 92, and the server 97 may be performed through a wired line or wirelessly. The computer 92 and the server 97 may be integrally formed, and the computer 92 and/or the server 97 may be omitted. The digital camera 10 may be made to have a function of communication with the server 97, so that the transmission and reception of data are directly performed between the digital camera 10 and the server 97.

Fig. 2 is a block diagram showing an example of the configuration of the body controller 28. The body controller 28 includes a device control unit 34 and an image processing unit 35, and performs overall control of the camera body 14.

The device control unit 34 controls the output of an image signal (image data) from the imaging element 26, generates a control signal for controlling the lens unit 12 and transmits the control signal to the lens unit 12 (lens unit controller 20) through the camera body input and output unit 30, stores image data before and after image processing (RAW data, JPEG data, or the like) in the main body storage unit 31, and transmits the image data before and after image processing (RAW data, JPEG data, or the like) to an external device (computer 92 or the like) connected through the input and output interface 32, for example. In addition, the device control unit 34 appropriately controls various devices provided in the digital camera 10, such as a display unit (an electronic view finder (EVF), a back liquid crystal display unit: user interface 29).

On the other hand, the image processing unit 35 performs arbitrary image processing on the image signal from the imaging element 26 when necessary. Various kinds of image processing, for example, sensor correction processing, demosaic (synchronization) processing, pixel interpolation processing, color correction processing (offset correction processing, white balance processing, color matric processing, gamma conversion processing, and the like), RGB image processing (sharpness processing, tone correction processing, exposure correction processing, outline correction processing, and the like), RGB/YCrCb conversion processing, and image compression processing are appropriately performed in the image processing unit 35. In particular, the image processing unit 35 in this example performs restoration processing (point image restoration processing) based on the point spread function of the optical system and sharpening processing (outline enhancement processing), which is not based on the point spread function, on the image signal (image data).

Fig. 3 is a block diagram showing an example of the configuration of the image processing unit 35, and in particular, shows the configuration relevant to point image restoration processing.

The image processing unit 35 in this example includes a sharpness restoration control unit 37 and a restoration processing unit 38.

The restoration processing unit 38 performs restoration processing using a restoration filter based on the point spread function for the image data that is acquired from the imaging element 26 by the imaging of the subject using the optical system (lens 16 or the like). The restoration filter is a filter to recover the PSF degradation. For example, a Wiener filter can be appropriately used as a restoration filter. For the restoration filter, a single filter may be prepared for the entire image, or different filters may be prepared for each position (each image height) in the image.

The sharpness restoration control unit 37 controls the restoration processing unit 38 to adjust the restoration rate of image data by the restoration processing. The sharpness restoration control unit 37 in this example adjusts the restoration rate according to a focus region, a quasi-focus region, and a defocus region in the original image corresponding to original image data.

Here, the focus region in the original image is a region where a focus-controlled main subject or the like is present, and refers to a region formed as a range (allowed circle of confusion) that can be allowed as points on the image plane when points on the object surface are imaged. The focus region is a region regarded to be in focus. In the case of a digital camera, generally, the size of one pixel of the imaging element is used as the size of an allowed circle of confusion.

The quasi-focus region refers to an intermediate region between the above-described focus region and the defocus region, and is a region where the resolution is improved if restoration processing is performed but there is a possibility that the image quality will be degraded due to over-correction if the same restoration processing as for the focus region is performed. Details of the quasi-focus region will be described later.

The defocus region is a region where the resolution is not improved even if the restoration processing is performed and image quality degradation due to over-correction is small, and is a region where the effect of the restoration processing cannot be obtained.

The point image restoration processing may cause artifacts (ringing or the like) or the like by incorrect correction depending on an imaging scene (subject). In addition, in the case of using different restoration filters according to the imaging conditions, there may be a variation in the restoration rate of an image after the point image restoration processing.

The following embodiments relate to techniques for obtaining a clear image by recovering the image quality, which is damaged by the point spread phenomenon of the optical system, by effectively preventing the overcorrection or the incorrect correction described above at the time of point image restoration processing.

<First embodiment>

The sharpness restoration control unit 37 according to the present embodiment adjusts the restoration rate in point image restoration processing.

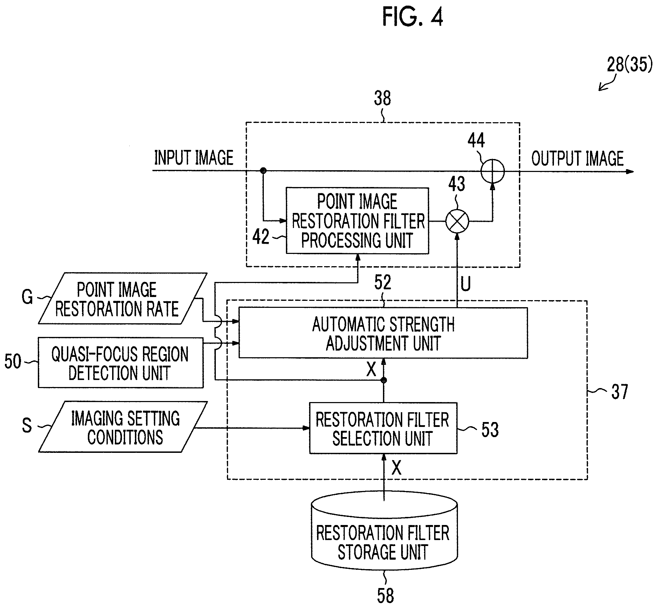

Fig. 4 is a diagram showing the configuration of a processing block that performs point image restoration processing according to a first embodiment.

The restoration processing unit 38 includes a point image restoration filter processing unit 42, a restoration multiplier 43, and a restoration adder 44. The point image restoration filter processing unit 42 applies a restoration filter corresponding to the point spread function of the optical system (lens 16 or the like) to input image data.

The restoration multiplier 43 performs gain control by multiplying the image data obtained by the point image restoration filter processing unit 42 by restoration strength magnification U. The restoration adder 44 multiplies the input image data by magnification (1 - U), and adds up the result and the image data after the multiplication of the restoration strength magnification U. The point image restoration processing is formed by a series of processing in the point image restoration filter processing unit 42, the restoration multiplier 43, and the restoration adder 44.

In addition, the restoration processing unit 38 can reflect the restoration strength magnification U in the image data using an arbitrary method. In the present embodiment and other embodiments, instead of the method described above, other methods equivalent to the above method may be used. For example, a restoration filter corresponding to the point spread function of the optical system is applied to input image data by the point image restoration filter processing unit 42. Then, increment or decrement data of the image is calculated, and gain control of the increment or decrement data is performed by the restoration multiplier 43 in order to perform multiplication between the increment or decrement data and the restoration strength magnification U. Then, the restoration adder 44 may add up the image data (input image) before being input to the point image restoration filter processing unit 42 and the increment or decrement data after the multiplication of the restoration strength magnification U.

Instead of the restoration filter and the restoration strength magnification U being input from the sharpness restoration control unit 37 to be described later, a restoration filter (restoration filter appropriately selected from a plurality of restoration filters having different restoration strengths) corresponding to the restoration rate may be input to the restoration processing unit 38 so that it is possible to adjust the restoration rate.

The sharpness restoration control unit 37 includes an automatic strength adjustment unit 52 and a restoration filter selection unit 53. The restoration filter selection unit 53 selects a restoration filter X based on the point spread function of the optical system (lens 16 or the like) used in the imaging of image data, from a restoration filter storage unit 58, based on the imaging setting conditions S (a zoom stage, an F number, a subject distance, and the like). Then, the restoration filter selection unit 53 transmits the selected restoration filter X to the automatic strength adjustment unit 52 and the point image restoration filter processing unit 42 of the restoration processing unit 38. The point image restoration filter processing unit 42 applies the restoration filter X transmitted from the restoration filter selection unit 53 to the input image.

The restoration filter storage unit 58 stores a plurality of restoration filters based on the point spread function of a plurality of optical systems (lens 16 or the like) for each of the imaging setting conditions. The restoration filter storage unit 58 may be provided in the camera body 14, or may be provided in the lens unit 12.

The automatic strength adjustment unit 52 determines the restoration strength magnification U corresponding to a point image restoration rate G based on information indicating a quasi-focus region in the original image from a quasi-focus region detection unit 50 to be described later (here, "restoration strength magnification $U \geq 0$"). Then, the automatic strength adjustment unit 52 transmits the determined restoration strength magnification U to the restoration multiplier 43. The restoration strength magnification U is a strength adjustment parameter in the restoration processing unit 38, and the restoration multiplier 43 performs multiplication processing using the restoration strength magnification U transmitted from the automatic strength adjustment unit 52.

In addition, the automatic strength adjustment unit 52 acquires the frequency characteristics of a filter used by the point image restoration filter processing unit 42. For example, the restoration filter X used by the point image restoration filter processing unit 42 is transmitted to the automatic strength adjustment unit 52 from the restoration filter selection unit 53.

For example, the determination of the restoration filter X and the restoration strength magnification U in the sharpness restoration control unit 37 can be performed according to the following flow.

First, the imaging setting conditions S are acquired by the body controller 28, and the restoration filter X corresponding to the imaging setting conditions S is selected by the restoration filter selection unit 53. The restoration filter X is designed so as to minimize the degree of image degradation based on the PSF of the optical system (lens 16 or the like) corresponding to the imaging setting conditions S by the least squares criterion, and the ideal frequency characteristics of the restoration filter X can be designed by the Wiener filter characteristics. In this example, after the ideal frequency characteristics of the restoration filter X are determined, an FIR filter reflecting the frequency characteristics is determined as the restoration filter X. The restoration filter X may be any of a real space filter and a frequency space filter. In the case of forming the restoration filter X using a real space filter formed by a plurality of taps, it is preferable to set an FIR filter, which approximates best in a range in which the ideal frequency characteristics can be realized by the desired number of taps, as the restoration filter X. In general, since the shape of the PSF changes with the image height, it is desirable that the restoration filter X has different frequency characteristics according to the image height in the image. Accordingly, a set including a plurality of restoration filters determined according to the position in the image is referred to as a "restoration filter X" in a broad sense, and a restoration filter applied to the position (pixel) of the coordinates (i, j) in the image is denoted as "$X_{i,j}$".

As described above, the restoration filter X is determined based on the imaging setting conditions S in the imaging of image data. However, the imaging setting conditions S may include "setting conditions affecting the point spread function" and "imaging conditions that do not affect the point spread function". For example, the "setting conditions" include at least one of diaphragm information, zoom information, subject distance information, and lens type information of the optical system. In addition, the "imaging conditions" include at least either imaging sensitivity information or imaging mode information.

The imaging setting conditions S can be input to the restoration filter selection unit 53 using an arbitrary method, and the imaging setting conditions S are appropriately transmitted to the restoration filter selection unit 53 from a control processing unit (not shown) that manages the imaging setting conditions S of the device control unit 34 and the image processing unit 35 of the body controller 28.

On the other hand, the point image restoration rate G is designated in advance by the user before the image processing in the restoration processing unit 38. The method of designating the point image restoration rate G by the user is not particularly limited. For example, it is possible to easily determine the point image restoration rate G by displaying adjustment means, such as a slider for designating the point image restoration rate G, on the user interface 29 (back display unit or the like) so that the user performs an operation through the adjustment means. The case where the point image restoration rate G is 0 (zero) corresponds to a case where the point image restoration processing is OFF. The restoration strength magnification U in the point image restoration processing may be changed to have consecutive values, or may be changed to have discrete values, or may be changed according to ON/OFF (according to whether or not the predetermined magnification is "0 (zero)"). Alternatively, it is possible to mount a processing circuit or the like that can change the restoration strength magnification U using an arbitrary method.

The method of determining the point image restoration rate G is not limited to the designation of the user, and the point image restoration rate G may be calculated and determined based on any information. That is, the sharpness restoration control unit 37 (automatic strength adjustment unit 52) may determine the point image restoration rate G based on the designated restoration rate that is designated by the user, or the point image restoration rate G determined based on the optical characteristics information indicating the characteristics of the optical system may be used. The "optical characteristics information" referred to herein may include the type information of the lens 16 provided in the optical system has, individual differences information of the optical system, and other imaging setting conditions. The point image restoration rate G itself in which the optical characteristics of the optical system are reflected may be included in the "optical characteristics information". The optical characteristic information is stored in an arbitrary storage unit. For example, the optical characteristic information may be stored in a storage unit (optical system storage unit) of the lens unit 12, or the optical characteristic information may be stored in a storage unit (main body storage unit) of the camera body 14. Accordingly, in the sharpness restoration control unit 37 (body controller 28) or the like, the point image restoration rate G may be determined based on the optical characteristics information stored in a storage unit (an optical system storage unit, a main body storage unit).

In addition, the value of the point image restoration rate G may depend on the imaging setting conditions S, and the point image restoration rate G having a different value according to the imaging setting conditions S may be selected by the sharpness restoration control unit 37 (body controller 28) or the like. In this case, for example, in order to suppress artifacts the degree of generation changes depending on the F number, the point image restoration rate G may be set to be relatively low intentionally in a specific F number (imaging setting conditions S).

It is assumed that the frequency characteristics of the restoration filter $X_{i,j}$ (filter for extracting restoration components in the point image restoration processing) are "$X_{i,j}(\omega_x, \omega_y)$". In this case, the frequency characteristics of the restoration processing unit 38 are expressed by the following Equation 1.

$$(\text{Equation 1}) \quad F(\omega_x, \omega_y | U, x_{i,j}) = 1 + U \times x_{i,j}(\omega_x, \omega_y)$$

"F($\omega_x$, $\omega_y$|U, $x_{i,j}$)" shows a function for ($\omega_x$, $\omega_y$) (frequencies in the x and y directions) with the restoration strength magnification U and the frequency characteristics $x_{i,j}$ as parameters, and this function is determined depending on the configuration of the image processing system.

On the other hand, strength adjustment (determination of the restoration strength magnification U used in the restoration multiplier 43) in the point image restoration processing is performed, based on the information indicating a quasi-focus region in the original image from the quasi-focus region detection unit 50, so that the restoration rate for the original image data of the quasi-focus region is smaller than the restoration rate for the original image data of the focus region. Specifically, assuming that the restoration strength magnification U for the original image data of the focus region is 1.0, the restoration strength magnification U for the original image data of the quasi-focus region is set to 0 < U < 1.0.

Therefore, by setting the restoration strength for the original image data of the quasi-focus region to be weaker than the restoration strength for the original image data of the focus region, it is possible to prevent over-correction while improving the resolution of the original image data of the quasi-focus region. As a result, it is possible to obtain good restored image data.

<Quasi-focus region>

Next, a focus region, a quasi-focus region, and a defocus region will be described.

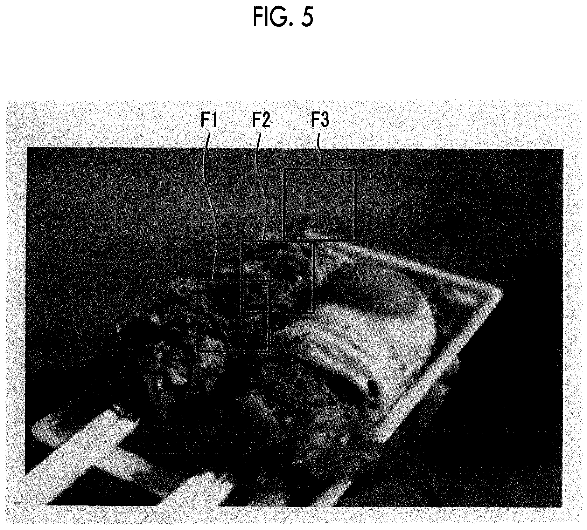

Fig. 5 shows an example of an image obtained by imaging a subject for which the subject distance changes continuously.

In Fig. 5, regions surrounded by frames F1, F2, and F3 show a focus region, a quasi-focus region, and a defocus region, respectively. The quasi-focus region surrounded by the frame F2 is a region having an intermediate subject distance between the subject distance of the focus region and the subject distance of the defocus region. In Fig. 5, in order to draw frames largely, parts of the frames F1 and frames F2 overlap each other. In this example, however, the focus region and the quasi-focus region do not overlap each other. In addition, a quasi-focus region is also present on the front side in Fig. 5 from the focus region shown by the frame F1.

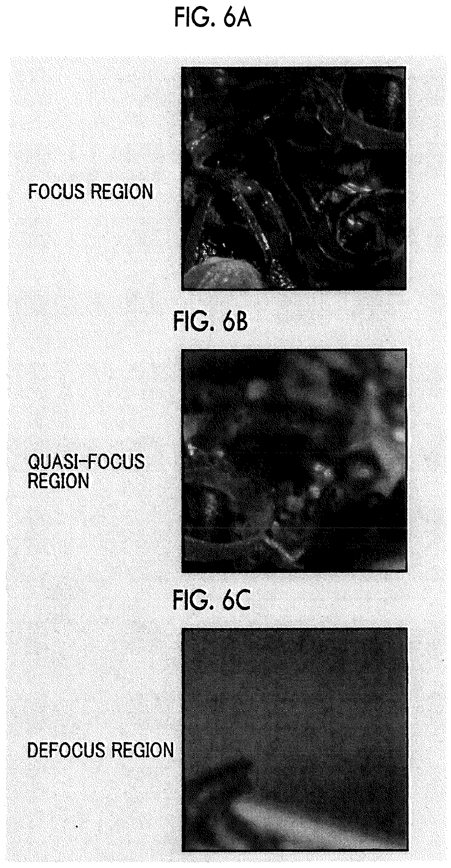

Figs. 6A, 6B, and 6C are enlarged views of the images of the focus region, the quasi-focus region, and the defocus region shown in Fig. 5, respectively.

Assuming that the restoration filter X selected according to the imaging setting conditions or the like as described above is used for the original image data of the focus region shown in Fig. 6A and the restoration strength magnification U is 1.0, it is possible to satisfactorily restore an image degraded due to the point spread function of the optical system 12. Therefore, it is possible to make the image of the focus region clearer.

On the other hand, when the same restoration processing as for the original image data of the focus region is performed for the original image data of the quasi-focus region shown in Fig. 6B, noise appears in the image. Accordingly, the image quality is rather degraded (over-corrected). Therefore, for the original image data of the quasi-focus region, preventing over-correction by turning off restoration processing may be considered. However, since an edge portion of an image is also present in the original image data of the quasi-focus region, it is desirable to perform restoration processing for restoring the edge portion.

Therefore, in the present invention, by adjusting the restoration rate for the original image data of the quasi-focus region so as to be smaller than the restoration rate for the original image data of the focus region, over-correction due to restoration processing for the original image data of the quasi-focus region is prevented. In addition, it is possible to improve the image quality of the original image data of the quasi-focus region by the restoration processing.

In the original image data of the defocus region shown in Fig. 6C, it is not possible to improve the image quality by the restoration processing since no edge portion is present. However, even if the restoration processing is performed, degradation of image quality as in the image data of the quasi-focus region is not noticeable.

<Definition 1 of quasi-focus>

By focus-shifting the ISO resolution chart (16M data) sequentially from a focus position by manual focusing (increasing the amount of defocus sequentially from zero), "quasi-focus" was defined from the characteristics of a response (spatial frequency response (SFR)) and a point where there is concern about noise such as image roughness generated by the point image restoration processing.

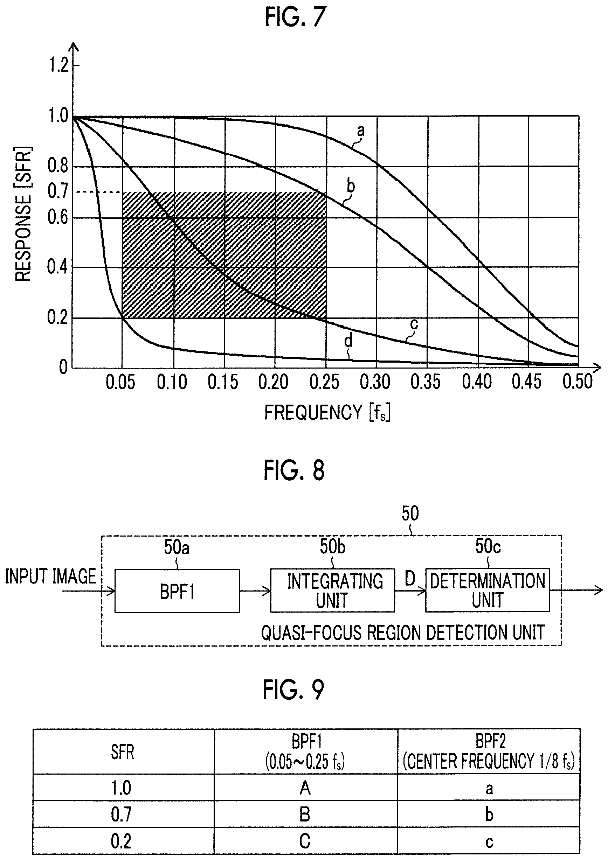

In a graph shown in Fig. 7, the horizontal axis indicates a sampling frequency [fs], and the vertical axis indicates a response [SFR]. Instead of the sampling frequency [fs] on the horizontal axis of the graph, the horizontal display resolution (TV lines) of a television screen may be shown. In this case, it is possible to perform conversion into TV lines by multiplying fs by 6528.

A graph a shown in Fig. 7 shows the characteristics of a just-focus image, and a graph b is slightly shifted from the just-focus but shows the characteristics of an image in the depth of field. A graph c shows the characteristics of a "quasi-focus" image (shows that there is concern about image roughness at the time of image restoration processing), and a graph d shows the characteristics of a defocus image.

Here, in the frequency band of Nyquist frequency fn (0.5 fs: 3264 TV lines) to 0.25 fs (1632 TV lines) and the frequency band less than 0.05 fs (326 TV lines), noise of a feeling of image roughness did not appear in the edge portion even if the response is low.

Therefore, a frequency in the range of 0.05 fs (326 TV lines) to 0.25 fs (1632 TV lines) is defined as a frequency to be extracted in order to determine "quasi-focus", and an image for which the response of the frequency falls within the range of 0.2 to 0.7 (that is, a range indicated by hatching in Fig. 7) is defined as a "quasi-focus" image. In addition, 0.1 fs to 0.2 fs are more preferable as a frequency to be extracted in order to determine "quasi-focus". In this case, the range of the response determined to be "quasi-focus" is more preferably 0.25 to 0.55, and even more preferably 0.3 to 0.45.

[First embodiment of a quasi-focus region detection unit]

Next, a first embodiment of the quasi-focus region detection unit 50 shown in Fig. 4 will be described.

Fig. 8 is a block diagram showing a first embodiment of the quasi-focus region detection unit 50 that detects a quasi-focus region corresponding to the definition 1 of the quasi-focus described above. The quasi-focus region detection unit 50 of the first embodiment is configured to include a band pass filter (BPF1) 50a, a summing unit 50b, and a determination unit 50c.

The band pass filter 50a that is a form of a frequency component extraction unit passes frequency components near a specific frequency including the specific frequency (specifically, frequency components of 0.05 fs (326 TV lines) to 0.25 fs (1632 TV lines)), among the frequency components of original image data (input image). The summing unit 50b sums the absolute values of the frequency components input from the band pass filter 50a for each separate region, which is obtained by screen-dividing the original image into 8 x 8 or 16 x 16, and outputs a sum value D obtained by addition to the determination unit 50c.

The determination unit 50c determines whether or not each separate region is a quasi-focus region based on the magnitude of the sum value D input for each separate region.

In a case where the sum value D output from the summing unit 50b of the quasi-focus region detection unit 50 is A, B, and C when imaging the ISO resolution chart in a focus state in which the response corresponds to 1.0, 0.7, and 0.2 as shown in Fig. 9, the values B and C corresponding to the response of 0.2 and 0.7 are acquired as an upper limit B and a lower limit C for determining a quasi-focus region.

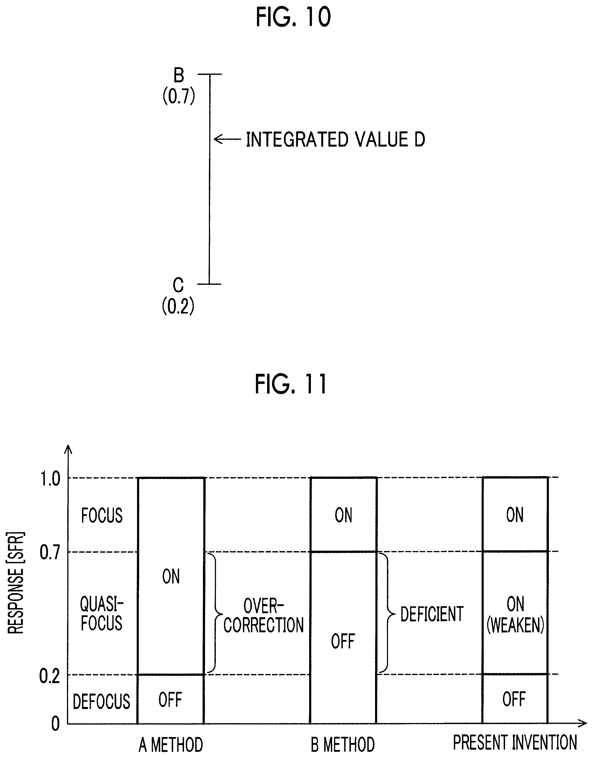

According to whether or not the sum value D input for each separate region of the original image falls within the range of the upper limit B and the lower limit C as shown in Fig. 10, the determination unit 50c determines whether or not each separate region is a quasi-focus region. The sum value D of the output of the BPF1 of the original image is shown in the diagram.

The determination unit 50c can determine that the separate region is a focus region in a case where the sum value D input for each separate region of the original image exceeds the upper limit B, and can determine that the separate region is a defocus region in a case where the sum value D input for each separate region of the original image is less than the lower limit C.

Instead of the band pass filter 50a, a narrow band pass filter (BPF2) that passes a specific frequency (for example, a center frequency is about 1/8 fs) may be used as a frequency component extraction unit in the quasi-focus region detection unit 50. In the case of using the narrow band passing filter (BPF2), as shown in Fig. 9, it is necessary to acquire the upper limit b and the lower limit c for determining a quasi-focus region. That is, in a case where the sum value D output from the summing unit 50b of the quasi-focus region detection unit 50 is a, b, and c when imaging the ISO resolution chart, the values b and c corresponding to the response of 0.2 and 0.7 are acquired as an upper limit b and a lower limit c for determining a quasi-focus region.

In addition, it is preferable that a frequency component extraction unit, such as the band pass filter 50a, includes an edge portion detection unit that detects an edge portion in a separate region for each separate region in the original image, so that a desired frequency component is extracted from the original image data of the separate region where an edge portion has been detected. This is because a quasi-focus region or the like cannot be determined from the image data of a separate region where no edge portion is present.

The setting of a separate region described above is an example, and the present invention is not limited thereto. Any setting is possible as long as it is possible to extract a frequency component for each separate region.

Fig. 11 is a diagram showing an example of comparison between the point image restoration processing according to the present invention and point image restoration processing based on another method.

In the present invention, restoration processing is turned on for the original image data of the quasi-focus region as described above, but the restoration rate is set to be lower (restoration strength is set to be weaker) than for the original image data of the focus region, so that over-correction does not occur while restoring the original image data of the quasi-focus region.

On the other hand, in the case of an A method of performing the restoration processing for the original image data of the quasi-focus region in the same manner as for the original image data of the focus region, image data of the quasi-focus region is over-corrected to degrade the image quality. In the case of a B method of performing the restoration processing only for the original image data of the focus region, the original image data of the quasi-focus region is not restored. Accordingly, the resolution is not sufficient.

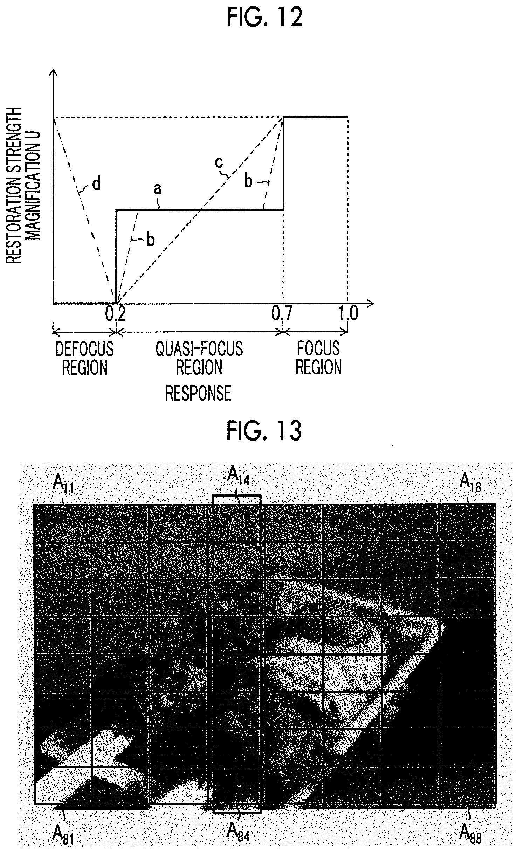

Fig. 12 is a diagram showing a variation of the adjustment of the restoration rate (restoration strength magnification U) for the original image data of the quasi-focus region by the automatic strength adjustment unit 52.

As shown by the solid line in Fig. 12, the automatic strength adjustment unit 52 can adjust the restoration strength magnification U for the original image data of the quasi-focus region to a constant value lower than the restoration strength magnification U for the original image data of the focus region (for example, about 1/2 of the restoration strength magnification U for the original image data of the focus region).

In this case, the restoration rate (restoration strength magnification U) of the boundary between the defocus region and the quasi-focus region and the boundary between the quasi-focus region and the focus region is greatly changed in a stepwise manner. Accordingly, a restoration strength difference occurs in the original image data of the boundaries. Therefore, as shown by the one-dot chain line b in Fig. 12, it is preferable that the automatic strength adjustment unit 52 changes the restoration strength magnification U of the boundaries continuously so that no restoration strength difference occurs in the original image data of the boundaries. In addition, since the restoration strength step difference at the boundary between the defocus region and the quasi-focus region is not noticeable, only the restoration strength magnification U of the boundary between the quasi-focus region and the focus region may be continuously changed.

In addition, as shown by the broken line c in Fig. 12, the automatic strength adjustment unit 52 can change the restoration strength magnification U for the original image data of the quasi-focus region continuously from the defocus region to the focus region according to the magnitude of the response of the quasi-focus region. The magnitude of the response of the quasi-focus region can be calculated from the magnitude of the sum value D obtained by the addition of the summing unit 50b (Fig. 8) of the quasi-focus region detection unit 50.

According to this, for the original image data of the quasi-focus region where the response is changed over a range from defocus to focus, it is possible to change the restoration strength continuously. Since the magnitude of the response of the quasi-focus region is equivalent to the defocus amount (the amount of defocus), the summing unit 50b of the quasi-focus region detection unit 50 can function as a defocus amount detection unit (first defocus amount detection unit).

The defocus amount in the quasi-focus region can be calculated based on the phase difference between the output signals of phase difference pixels to be described later.

For the original image data of the defocus region, the automatic strength adjustment unit 52 can set the restoration strength magnification U to 0 (turn off the point image restoration processing). However, the automatic strength adjustment unit 52 may increase the restoration strength magnification U as the degree of defocusing increases as shown by the two-dot chain line d in Fig. 12. This is because the influence of image quality degradation on the original image data due to restoration processing decreases as the degree of defocusing increases.

<Definition 2 of quasi-focus>

Imaging conditions at the time of imaging of original image data (a F number, a focal length, and an imaging distance) and a subject distance for each separate region in the original image corresponding to the original image data are acquired, and a certain range exceeding the depth of field (focus range) determined by the acquired imaging conditions is defined as quasi-focus and the separate region having a subject distance within the range is set as a quasi-focus region.

Next, an example of a method of acquiring the subject distance for each separate region in the original image will be described.

Fig. 13 shows an original image that is divided into 64 (8 x 8) regions (separate regions $A_{11}$ to $A_{88}$). First, from the original image data corresponding to the separate regions $A_{11}$ to $A_{88}$, an AF evaluation value used in the contrast AF (auto focus) is calculated for each of the separate regions $A_{11}$ to $A_{88}$. That is, original image data is acquired for each predetermined lens position by moving the lens 16 over the lens movement range corresponding to infinity from close (AF search). Then, high-frequency components of the acquired original image data are extracted using a high pass filter, and the sum value of the absolute values of the extracted high-frequency components is acquired as the AF evaluation value.

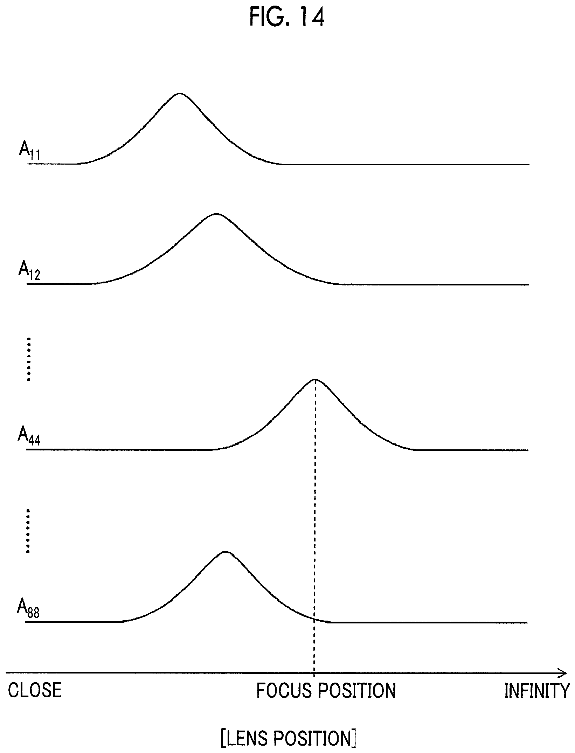

Fig. 14 is a diagram showing an example of the AF evaluation value acquired for each of the separate regions $A_{11}$ to $A_{88}$.

Since a lens position when the peak value of the AF evaluation value acquired from each of the separate regions $A_{11}$ to $A_{88}$ is obtained corresponds to the subject distance of each of the separate regions $A_{11}$ to $A_{88}$, it is possible to calculate the subject distances of the separate regions $A_{11}$ to $A_{88}$ from the lens position where the AF evaluation value is a peak value.

In a case where the separate region A$_{44}$ is set as an AF region, it is possible to perform the contrast AF by moving the lens 16 to a lens position (focus position) where the AF evaluation value acquired from the separate region A$_{44}$ is a peak value. In addition, it is possible to calculate the object distance from the lens position of the focus position.

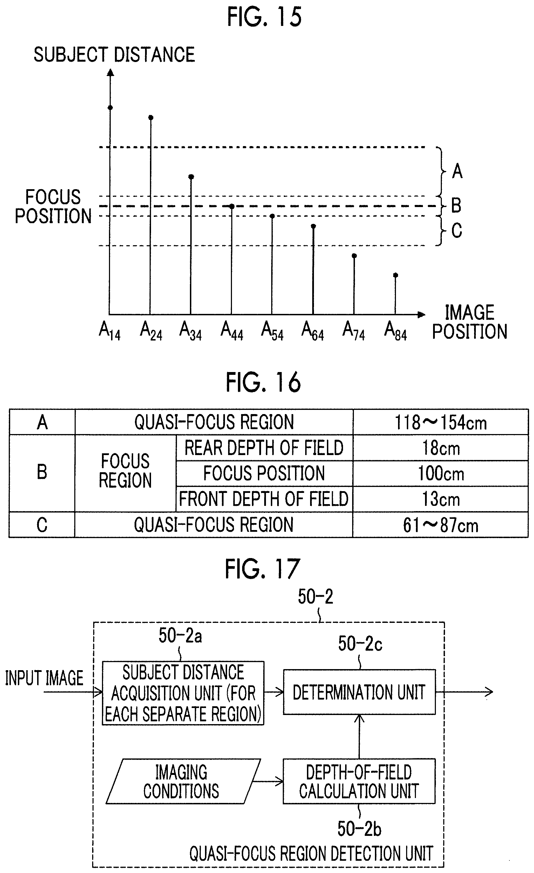

Fig. 15 is a diagram showing the subject distances of subjects in eight separate regions A$_{14}$ to A$_{84}$ in the vertical direction including the separate region A$_{44}$ that is the AF region.

In Fig. 15, regions A and C are quasi-focus regions, and a region B is a focus region. In addition, a region on the farther side than the quasi-focus region A and a region on the closer side than the quasi-focus region C are defocus regions.

Since the separate region A$_{44}$ is an AF region, the separate region A$_{44}$ corresponds to the subject distance of the focus position, and is included in the focus region B.

Here, the focus region B corresponds to the depth of field determined by the imaging conditions at the time of imaging of the original image. Specifically, in the case of imaging conditions in which the focal length f is 23 mm, the F number is F5.6, and the subject distance (imaging distance) L of the focus position is 100 cm, the depth of field (= front depth of field + rear depth of field) is as follows assuming that the diameter $\delta$ of the allowed circle of confusion is 0.015 mm.

$$\text{Front depth of field} = (\delta \times F \times L^2)/(f^2 + \delta \times F \times L) \cong 13 \ [\text{cm}]$$

$$\text{Rear depth of field} = (\delta \times F \times L^2)/(f^2 - \delta \times F \times L) \cong 18 \ [\text{cm}]$$

Then, the quasi-focus region A on the farther side than the focus region B can be defined as a certain range exceeding the rear depth of field (for example, a range of twice the rear depth of field). Similarly, the quasi-focus region C on the closer side than the focus region B can be defined as a certain range exceeding the front depth of field (for example, a range of twice the front depth of field).

The quasi-focus regions A and C and the focus region B described above and the subject distances corresponding thereto are summarized as shown in Fig. 16.

[Second embodiment of a quasi-focus region detection unit]

Next, a quasi-focus region detection unit 50-2 of a second embodiment that replaces the quasi-focus region detection unit 50 shown in Fig. 4 will be described.

Fig. 17 is a block diagram of the quasi-focus region detection unit 50-2 that detects a quasi-focus region corresponding to the definition 2 of quasi-focus described above. The quasi-focus region detection unit 50-2 of the second embodiment is configured to include a subject distance acquisition unit 50-2a, which corresponds to a form of an acquisition unit that acquires the subject distance for each separate region in the original image corresponding to the original image data and the imaging conditions at the time of imaging of the original image data, a depth-of-field calculation unit 50-2b, and a determination unit 50-2c.

The subject distance acquisition unit 50-2a acquires the subject distance for each separate region of the original image. The subject distance for each separate region can be calculated based on the lens position corresponding to the peak value of the AF evaluation value for each separate region acquired at the time of contrast AF as described above. The method of acquiring the subject distance for each separate region of the original image is not limited to the present embodiment.

The depth-of-field calculation unit 50-2b acquires imaging conditions at the time of imaging of the original image, and calculates the depth of field based on the acquired imaging conditions.

The determination unit 50-2c extracts a separate region having a subject distance corresponding to the quasi-focus regions A and C shown in Fig. 15, based on the information indicating the subject distance for each separate region that is input from the subject distance acquisition unit 50-2a and the information indicating the depth of field of the original image that is input from the depth-of-field calculation unit 50-2b, and determines the extracted separate region as a quasi-focus region.

In addition, the determination unit 50-2c can extract a separate region having a subject distance corresponding to the focus region B shown in Fig. 15, determine the extracted separate region as a focus region, and determine regions other than the focus region B and the quasi-focus regions A and C as defocus regions. Without being limited to the information acquired at the time of imaging of the original image, in a case where the subject distance and the imaging conditions for each separate region of the original image are included in the attached information of an image file in which the captured original image data is stored, the quasi-focus region detection unit 50-2 may acquire the subject distance and the imaging conditions from the attached information.

<Definition 3 of quasi-focus>

In a case where the defocus amount of all regions within the imaging range is detected and the detected defocus amount exceeds a focus range and is within the defocus amount regarded as defocus, the region of the original image having the defocus amount can be defined as a quasi-focus region.

For example, the defocus amount of all regions within the imaging range can be detected based on the output signals of phase difference pixels of the imaging element including phase difference pixels. In the imaging element, all pixels may be configured as phase difference pixels, or phase difference pixels may be discretely disposed in all regions within the imaging range.

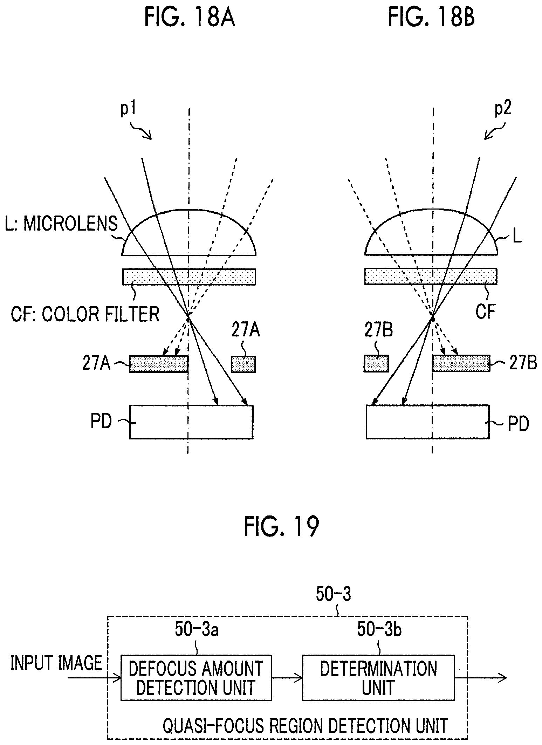

Figs. 18A and 18B are diagrams showing examples of the configuration of a phase difference pixel (a first phase difference pixel p1 and a second phase difference pixel p2).

As shown in Fig. 18A, a light blocking member 27A is disposed on the front surface side (microlens L side) of a photodiode PD of the first phase difference pixel p1. On the other hand, as shown in Fig. 18B, a light blocking member 27B is disposed on the front surface side of a photodiode PD of the second phase difference pixel p2. The microlens L and the light blocking members 27A and 27B have a function as pupil dividing means. As shown in Fig. 18A, the light blocking member 27A shields the left half of the light receiving surface of the photodiode PD. For this reason, the first phase difference pixel p1 receives only light beams passing through the left side of the optical axis among light beams passing through the exit pupil of the lens 16.

As shown in Fig. 18B, the light blocking member 27B shields the right half of the light receiving surface of the photodiode PD of the second phase difference pixel p2. For this reason, the second phase difference pixel p2 receives only light beams passing through the right side of the optical axis among light beams passing through the exit pupil of the lens 16. Thus, due to the microlens L and the light blocking members 27A and 27B that are pupil dividing means, light beams passing through the exit pupil are divided into left and right light beams, and the left and right light beams are incident on the first phase difference pixel p1 and the second phase difference pixel p2, respectively.

Then, by detecting the phase difference between the output signal corresponding to the first phase difference pixel p1 and the output signal corresponding to the second phase difference pixel p2, it is possible to detect the defocus amount (the amount of defocus) in all regions within the imaging range. The defocus amount can be detected by multiplying the phase difference by a coefficient for converting the phase difference into the defocus amount.

A region, for which the detected defocus amount exceeds the focal depth and is less than a certain defocus amount that and can be determined as defocus, can be defined as a quasi-focus region.

The configuration of the phase difference pixel in the imaging element is not limited to the configuration examples shown in Figs. 18A and 18B, and any configuration capable of detecting the phase difference may be adopted. As an example, instead of providing the light blocking members 27A and 27B shown in Figs. 18A and 18B, an imaging element may be configured such that the photodiode PD is divided and a signal can be output to each separate photodiode PD. In this case, the respective separate photodiodes PD can be set as the first phase difference pixel p1 and the second phase difference pixel p2, and the defocus amount (the amount of defocus) can be detected by detecting the phase difference between the respective output signals.

[Third embodiment of a quasi-focus region detection unit]

Next, a quasi-focus region detection unit 50-3 of a third embodiment that replaces the quasi-focus region detection unit 50 shown in Fig. 4 will be described.

Fig. 19 is a block diagram of the quasi-focus region detection unit 50-3 that detects a quasi-focus region corresponding to the definition 3 of quasi-focus described above. The quasi-focus region detection unit 50-3 of the third embodiment is configured to include a defocus amount detection unit (second defocus amount detection unit) 50-3a and a determination unit 50-3b.

The defocus amount detection unit 50-3a detects a phase difference of all regions (each separate region) within the imaging range based on the output data of a pair of phase difference pixels in the input original image data, and detects the defocus amount for each separate region from the detected phase difference. The determination unit 50-3b determines a quasi-focus region based on the magnitude of the defocus amount for each separate region that is input from the defocus amount detection unit 50-3a.

In addition, the determination unit 50-3b can also determine a focus region and a defocus region based on the magnitude of the input defocus amount for each separate region.

[Second embodiment]

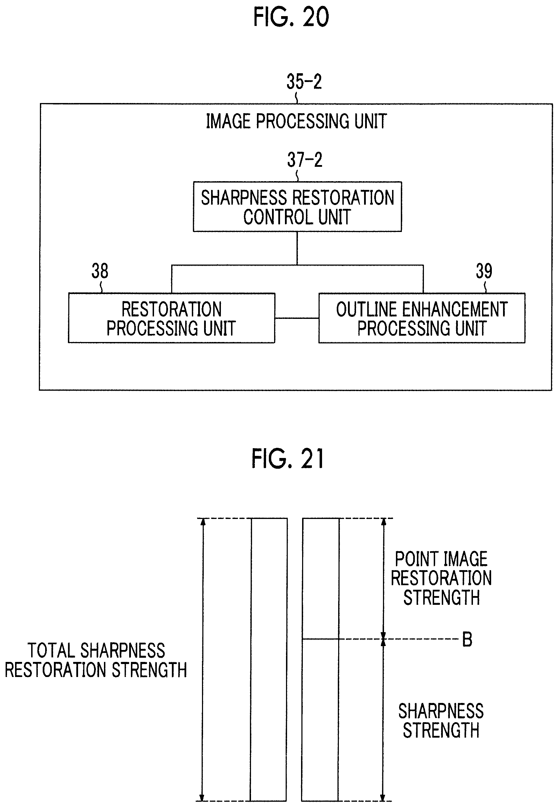

Fig. 20 is a block diagram showing an example of the configuration of an image processing unit 35-2 of a second embodiment that replaces the image processing unit 35 shown in Fig. 3.

The image processing unit 35-2 includes a sharpness restoration control unit 37-2, a restoration processing unit 38, and an outline enhancement processing unit 39 that functions as a sharpening processing unit that is not based on the point spread function. The restoration processing unit 38 is similar to the restoration processing unit 38 of the image processing unit 35 shown in Fig. 3. Accordingly, the detailed explanation thereof will be omitted.

The outline enhancement processing unit 39 performs sharpening processing using a sharpening filter, which is not based on the point spread function, on image data. The sharpening filter is not particularly limited if a filter reflecting the point spread function directly is not used, and a known outline enhancement filter can be used as a sharpening filter. As a sharpening filter, a single sharpening filter may be prepared for the entire image, or different filters may be prepared for each position (each image height) in the image.

The sharpness restoration control unit 37-2 controls the restoration processing unit 38 and the outline enhancement processing unit 39 to adjust the restoration rate of image data by the restoration processing and the sharpening rate of image data by the sharpening processing. For the adjustment of the restoration rate and the sharpening rate, the sharpness restoration control unit 37-2 in this example acquires a total sharpness restoration rate based on the restoration rate and the sharpening rate, acquires one of the restoration rate and the sharpening rate, and calculates the other one of the restoration rate and the sharpening rate based on the total sharpness restoration rate.

In the case of performing the point image restoration processing in addition to the sharpening processing, the sharpness restoration strength may be too strong to cause over-correction of the image or the like in the conventional technique. This may damage the image quality. Accordingly, in the case of performing both the sharpening processing and the point image restoration processing, it is preferable to weaken the sharpening strength in the sharpening processing and the restoration strength in the point image restoration processing compared with a case of performing only the point image restoration processing or only the sharpening processing.

The point image restoration processing may cause artifacts (ringing or the like) or the like by incorrect correction depending on an imaging scene or a subject. In addition, in the case of using different restoration filters according to the imaging conditions, there may be a variation in the restoration rate or the sense of resolution (sharpness) of an image after the point image restoration processing. The variation in the sharpness of the image or the incorrect correction becomes more noticeable by performing the sharpening processing.

The following second embodiment relates to a technique for obtaining a clear image by recovering the image quality, which is damaged by the point spread phenomenon of the optical system, by effectively preventing the over-correction or the incorrect correction described above even if the point image restoration processing and the sharpening processing are combined.

Fig. 21 is a conceptual diagram illustrating the adjustment of the point image restoration strength and the sharpening strength. The "total sharpness restoration strength (total sharpness restoration rate)" in Fig. 21 is a final sharpness target strength value determined from the desired image quality, and shows directly or indirectly the magnitude ratio between the input and the output for the entire image processing. Although the "total sharpness restoration strength (total sharpness restoration rate)" in this example may change according to the imaging setting conditions (optical characteristics information), the "total sharpness restoration strength (total sharpness restoration rate)" becomes a fixed value if the imaging setting conditions are determined. Various imaging conditions and setting conditions, for example, a lens, a diaphragm, zoom, a subject distance, sensitivity, and an imaging mode, are included in the imaging setting conditions. In addition, the "point image restoration strength" is restoration strength based on the point image restoration processing, and is determined according to the imaging setting conditions (optical characteristics information). The "sharpening strength" is the strength of sharpening by the sharpening processing.

The total sharpness restoration strength, the point image restoration strength, and the sharpening strength are indices indicating the degree of image change before and after image processing, and are determined according to any of the criteria that can appropriately express the degree of change in the image. Therefore, in a case where each of the point image restoration processing and the sharpening processing includes filter application processing and gain control processing, changes before and after the "filter application processing and the gain control processing" are expressed by the point image restoration strength and the sharpening strength.

For example, a case is assumed in which the point image restoration processing and the sharpening processing are performed in parallel and the "degree of image restoration (point image restoration strength) by the point image restoration processing" and the "degree of image sharpening (sharpening strength) by the sharpening processing" are determined by the "total sharpness restoration strength". In this case, since the relationship of "point image restoration strength + sharpening strength = total sharpness restoration strength" is satisfied, the sharpening strength may be changed by the amount of increase or decrease in the point image restoration strength, and the boundary position (B) between the point image restoration strength and the sharpening strength shown in Fig. 4 may be changed. Therefore, for example, if the total sharpness restoration strength and the point image restoration strength are determined, it is possible to calculate the optimal sharpening strength from both the total sharpness restoration strength and the point image restoration strength. Similarly, if the total sharpness restoration strength and the sharpening strength are determined, it is possible to calculate the optimal point image restoration strength from both the total sharpness restoration strength and the sharpening strength.

Fig. 21 just shows an intuitive conceptual diagram for easy understanding, and does not indicate that the relationship of "point image restoration strength + sharpening strength = total sharpness restoration strength" is always satisfied in the processing system that performs the point image restoration processing and the sharpening processing. For example, in a case where the point image restoration processing and the sharpening processing are performed in series, the total sharpness restoration strength is determined based on the product of the point image restoration strength and the sharpening strength. Therefore, in the following embodiments, the point image restoration strength and the sharpening strength are determined so that the "frequency amplification factor based on both the point image restoration strength and the sharpening strength" matches the "frequency amplification factor based on the total sharpness restoration strength".

For example, it is possible to set the point image restoration strength preferentially and adjust the sharpening strength according to the set point image restoration strength. In this case, it is possible to accurately perform the point image restoration processing according to the PSF of the optical system (lens 16 or the like). In addition, the point image restoration processing is delicate processing, and may cause adverse effects, such as over-correction, if the basic parameters are not correct. However, it is possible to effectively prevent the adverse effects, such as over-correction, by determining the point image restoration strength preferentially.

On the other hand, it is also possible to set the sharpening strength preferentially and adjust the point image restoration strength according to the set sharpening strength. In this case, the sharpening processing that is stable processing with less adverse effects is preferentially performed. The case of performing the sharpening processing preferentially is suitable for a case of performing imaging using an optical system (lens 16 or the like) having a good accuracy in optical characteristics, a case where the imaging scene is a night scene or a portrait, a case where art filter processing is performed, a case where it is difficult to obtain the effect of the point image restoration processing, a case where the adverse effects of the point image restoration processing are likely to occur, and the like.

The adjustment of the point image restoration strength and the sharpening strength can be performed by various criteria. For example, the total sharpness restoration strength is determined so that the frequency amplification factor at a specific frequency or a specific image position (image height position) is the same.

By adjusting the point image restoration strength and the sharpening strength by setting the total sharpness restoration strength as described above, a variation in the sharpness (restoration rate and resolution) of the image subjected to the point image restoration processing and the sharpening processing is suppressed. As a result, it is possible to improve the overall quality of the output image.

Specific embodiments regarding the adjustment of the point image restoration strength and the sharpening strength will be described below.

The sharpness restoration control unit 37-2 of the second embodiment acquires a restoration rate in the point image restoration processing, and calculates a "sharpening rate" in the sharpening processing based on the total sharpness restoration rate and the restoration rate.

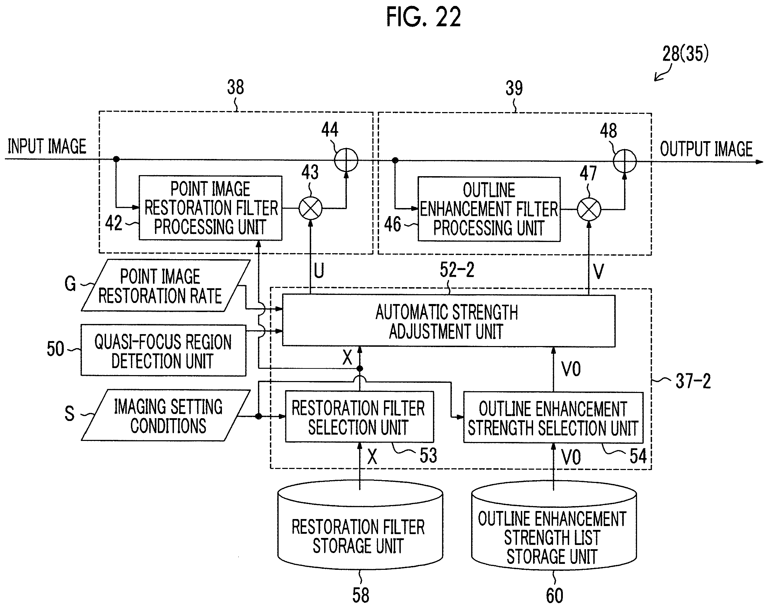

Fig. 22 is a diagram showing the configuration of a processing block that performs point image restoration processing and sharpening processing according to the second embodiment. The same portions as in the first embodiment shown in Fig. 4 are denoted by the same reference numerals, and the detailed explanation thereof will be omitted.

In the image processing system model of the second embodiment, a "signal processing block for point image restoration processing" and a "signal processing block" for arbitrary sharpness enhancement processing" are connected in series (cascaded), so that continuous signal strength adjustment can be performed by both the signal processing blocks. That is, the restoration processing unit 38 and the outline enhancement processing unit 39 are provided in series, and image data is subjected to one of the point image restoration processing and the sharpening processing (in the example shown in Fig. 22, "point image restoration processing") and is then subjected to the other processing (in the example shown in Fig. 22, "sharpening processing").

The outline enhancement processing unit 39 includes an outline enhancement filter processing unit 46, a sharpening multiplier 47, and a sharpening adder 48. In this example, image data after the point image restoration processing is input to the outline enhancement filter processing unit 46 as input image data. The outline enhancement filter processing unit 46 applies the sharpening filter (outline enhancement filter) to the input image data. The sharpening filter is determined according to an arbitrary method. In the outline enhancement filter processing unit 46, a single sharpening filter may be used, or a filter that is appropriately selected from a plurality of filters may be used as a sharpening filter. The sharpening multiplier 47 performs gain control by multiplying the image data obtained by the outline enhancement filter processing unit 46 by sharpening strength magnification V. The sharpening adder 48 multiplies the input image data by magnification (1 - V), and adds up the result and the image data after the multiplication of the sharpening strength magnification V. The sharpening processing is formed by a series of processing in the outline enhancement filter processing unit 46, the sharpening multiplier 47, and the sharpening adder 48.

Similar to the method of reflecting the restoration strength magnification U, the outline enhancement processing unit 39 can reflect the sharpening strength magnification V in the image data using an arbitrary method. In the present embodiment and other embodiments, instead of the method described above, other methods equivalent to the above method may be used. For example, a sharpening filter (outline enhancement filter) is applied to input image data by the outline enhancement filter processing unit 46. Then, increment or decrement data of the image is calculated, and gain control of the increment or decrement data is performed by the sharpening multiplier 47 in order to perform multiplication between the increment or decrement data and the sharpening strength magnification V. Then, the sharpening adder 48 may add up the image data (input image) before being input to the outline enhancement filter processing unit 46 and the increment or decrement data after the multiplication of the sharpening strength magnification V.

The sharpness restoration control unit 37-2 includes an automatic strength adjustment unit 52-2, a restoration filter selection unit 53, and an outline enhancement strength selection unit 54. The restoration filter selection unit 53 selects the restoration filter X from the restoration filter storage unit 58 based on the imaging setting conditions S, and transmits the selected restoration filter X to the automatic strength adjustment unit 52 and the point image restoration filter processing unit 42 of the restoration processing unit 38.

The outline enhancement strength selection unit 54 selects a sharpening strength magnification (outline enhancement strength) V0 corresponding to the imaging setting conditions S from an outline enhancement strength list storage unit 60, and transmits the selected sharpening strength magnification V0 to the automatic strength adjustment unit 52-2. In this example, the sharpening strength magnification V0 selected by the outline enhancement strength selection unit 54 is the sharpening strength magnification in a case where the point image restoration processing is not substantially performed in the restoration processing unit 38 (point image restoration filter processing unit 42).

The "sharpening strength magnification in a case where the point image restoration processing is not substantially performed" corresponds to the total sharpness restoration rate (total sharpness restoration strength). That is, in this example, the point image restoration strength and the sharpening strength are determined by the total sharpness restoration strength (refer to Fig. 21), and the total sharpness restoration strength in a case where the point image restoration processing is not performed is determined only by the sharpening strength. Therefore, the outline enhancement strength selection unit 54 in this example that acquires the sharpening strength magnification in a case where the point image restoration processing is not performed as the sharpening strength magnification V0 and supplies the sharpening strength magnification to the automatic strength adjustment unit 52-2 substantially supplies the total sharpness restoration rate (total sharpness restoration strength) to the automatic strength adjustment unit 52-2.

The automatic strength adjustment unit 52-2 determines the restoration strength magnification U and the sharpening strength magnification V corresponding to a point image restoration rate G based on the restoration filter X from the restoration filter selection unit 53 and the sharpening strength magnification V0 from the outline enhancement strength selection unit 54 (here, "restoration strength magnification U $\geq$ 0" and "sharpening strength magnification V $\geq$ 0" are satisfied).

As in the first embodiment shown in Fig. 4, strength adjustment (determination of the restoration strength magnification U used by the restoration multiplier 43) in the point image restoration processing is performed, based on the information indicating a quasi-focus region in the original image from the quasi-focus region detection unit 50, so that the restoration rate for the original image data of the quasi-focus region is smaller than the restoration rate for the original image data of the focus region.

Then, the automatic strength adjustment unit 52-2 transmits the determined restoration strength magnification U to the restoration multiplier 43, and transmits the sharpening strength magnification V to the sharpening multiplier 47. The restoration strength magnification U and the sharpening strength magnification V are strength adjustment parameters in the restoration processing unit 38 and the outline enhancement processing unit 39, respectively, and the restoration multiplier 43 and the sharpening multiplier 47 perform multiplication processing using the restoration strength magnification U and the sharpening strength magnification V that are transmitted from the automatic strength adjustment unit 52.

In addition, the automatic strength adjustment unit 52-2 acquires the frequency characteristics of a filter used in each of the point image restoration filter processing unit 42 and the outline enhancement filter processing unit 46. For example, the restoration filter X used by the point image restoration filter processing unit 42 is transmitted to the automatic strength adjustment unit 52-2 from the restoration filter selection unit 53. The automatic strength adjustment unit 52-2 also acquires a sharpening filter, which is used by the outline enhancement filter processing unit 46, using an arbitrary method. For example, in a case where the sharpening filter used by the outline enhancement filter processing unit 46 is fixed, the automatic strength adjustment unit 52-2 may acquire the frequency characteristics of the sharpening filter by storing the frequency characteristics of the sharpening filter in advance. In addition, a sharpening filter to be used may be transmitted to the automatic strength adjustment unit 52-2 from the outline enhancement filter processing unit 46, and the automatic strength adjustment unit 52-2 may acquire the frequency characteristics of the sharpening filter by analyzing the received sharpening filter.

When determining the restoration strength magnification U and the sharpening strength magnification V based on a total sharpness evaluation value to be described later, the automatic strength adjustment unit 52-2 considers the frequency characteristics of filters used in the point image restoration filter processing unit 42 and the outline enhancement filter processing unit 46. Specifically, the automatic strength adjustment unit 52-2 reflects the frequency characteristics of each filter in the total sharpness evaluation value, and determines the restoration strength magnification U and the sharpening strength magnification V based on the total sharpness evaluation value reflecting the frequency characteristics of the filter. The automatic strength adjustment unit 52-2 takes into consideration the information indicating the quasi-focus region in the original image, which is input from the quasi-focus region detection unit 50, when determining the restoration strength magnification U and the sharpening strength magnification V.

For example, the determination of the restoration strength magnification U and the sharpening strength magnification V in the automatic strength adjustment unit 52-2 can be performed according to the following flow.

First, the imaging setting conditions S are acquired by the body controller 28, and the restoration filter X corresponding to the imaging setting conditions S is selected by the restoration filter selection unit 53. In addition, the sharpening strength magnification V0 in a case where the point image restoration processing is OFF is selected according to the imaging setting conditions S by the outline enhancement strength selection unit 54.

The restoration filter X is determined based on the imaging setting conditions S in the imaging of image data. However, the imaging setting conditions S may include "setting conditions affecting the point spread function" and "imaging conditions that do not affect the point spread function". For example, the "setting conditions" include at least one of diaphragm information, zoom information, subject distance information, and lens type information of the optical system. In addition, the "imaging conditions" include at least either imaging sensitivity information or imaging mode information.

The imaging setting conditions S can be input to the restoration filter selection unit 53 and the outline enhancement strength selection unit 54 using an arbitrary method, and the imaging setting conditions S are appropriately transmitted to the restoration filter selection unit 53 and the outline enhancement strength selection unit 54 from a control processing unit (not shown) that manages the imaging setting conditions S of the device control unit 34 and the image processing unit 35 of the body controller 28.

On the other hand, the point image restoration rate G is designated in advance by the user before the image processing in the restoration processing unit 38 and the outline enhancement processing unit 39. The method of designating the point image restoration rate G by the user is not particularly limited. For example, it is possible to easily determine the point image restoration rate G by displaying adjustment means, such as a slider for designating the point image restoration rate G, on the user interface 29 (back display unit or the like) so that the user performs an operation through the adjustment means. The point image restoration rate G is basic data for controlling the restoration strength magnification U of the point image restoration processing by the restoration multiplier 43. As will be described later, for example, except for a case where the value of the point image restoration rate G is greater than a predetermined threshold value, the restoration strength magnification U and the point image restoration rate G are equal (restoration strength magnification U = point image restoration rate G).

Assuming that the frequency characteristics of a filter used in the outline enhancement filter processing unit 46 (filter for extracting outline enhancement components in the sharpening processing) are "$\phi(\omega_x, \omega_y)$", the frequency characteristics of a restoration filter $X_{i,j}$ (filter for extracting restoration components in the point image restoration processing) are set to "$x_{i,j}(\omega_x, \omega_y)$". In this case, the frequency characteristics of the entire image processing system shown in Fig. 22 in which the restoration processing unit 38 and the outline enhancement processing unit 39 (point image restoration processing and sharpening processing) are combined are expressed by the following Equation 2.

$$\text{(Equation 2)} \quad F(\omega_x, \omega_y | U, V, x_{i,j}) = \left[1 + U \times x_{i,j}(\omega_x, \omega_y)\right] \times \left[1 + V \times \phi(\omega_x, \omega_y)\right]$$

"$F(\omega_x, \omega_y | U, V, x_{i,j})$" shows a function for $(\omega_x, \omega_y)$ (frequencies in the x and y directions) with the restoration strength magnification U, the sharpening strength magnification V, the frequency characteristics $x_{i,j}$ as parameters, and this function is determined depending on the configuration of the image processing system.

On the other hand, strength adjustment (determination of the restoration strength magnification U used in the restoration multiplier 43) in the point image restoration processing is performed so that the total sharpness evaluation value (total sharpness restoration rate) $C(U, V, x_{i,j})$ defined by the following Equation 3 is maintained at a fixed value.

$$\text{(Equation 3)} \quad C(U, V, x_{i,j}) = \sum_{i,j} \iint w_{i,j}(\omega_x, \omega_y) F(\omega_x, \omega_y | U, V, x_{i,j}) d\omega_x d\omega_y$$

Here, "$w_{i,j}(\omega_x, \omega_y)$" is an arbitrary weighting function defined for each position (pixel position) (i, j) in the image, and the total sharpness evaluation value (total sharpness evaluation function) $C(U, V, x_{i,j})$ is defined by the weighted calculation of the frequency characteristics of the entire system. It is preferable that the weighting function $w_{i,j}(\omega_x, \omega_y)$ is designed to be visually significant frequency components and/or a large value at a position in an image. By using the total sharpness evaluation value C(U, V, x$_{i,j}$) defined by the above Equation 3, even if the strength of the point image restoration processing is changed, the degree of frequency enhancement in a target frequency band and/or a target position in an image is not changed. Accordingly, a large difference in sharpness does not occur. On the other hand, in a frequency band and/or a position in an image where the weighting function w$_{i, j}$(ω$_x$, ω$_y$) is relatively small, the difference in image quality due to the point image restoration processing is likely to be noticeable.

Based on the above, the values of the restoration strength magnification U and the sharpening strength magnification V can be determined as follows. That is, based on the point image restoration rate G input to the automatic strength adjustment unit 52, the value of the restoration strength magnification U is determined by the monotonically increasing function, and then the value of the sharpening strength magnification V is determined that the total sharpness evaluation value C(U, V, x$_{i,j}$) is maintained at a fixed value. Therefore, the automatic strength adjustment unit 52-2 performs the adjustment so that the value of the sharpening strength magnification V decreases as the value of the restoration strength magnification U increases and the value of the sharpening strength magnification V increases as the value of the restoration strength magnification U decreases. However, if the value of the restoration strength magnification U is too large, the total sharpness evaluation value C(U, V, x$_{i,j}$) may not be maintained constant even if the value of the sharpening strength magnification V is set to zero "0". That is, there may be a limitation on the range of the restoration strength magnification U in which the total sharpness evaluation value C(U, V, x$_{i,j}$) can be maintained constant.

If the upper limit of the restoration strength magnification U is denoted as "U$_{MAX}$", the maximum value of the restoration strength magnification U is limited as shown in the following Equation 4 so that the total sharpness evaluation value C(U, V, x$_{i,j}$) satisfies the relationship of "C(U$_{MAX}$, 0, x$_{i,j}$) = C(0, V0, x$_{i,j}$)".

$$\text{(Equation 4)} \quad U = \begin{cases} G & (G \leq U_{MAX}) \\ U_{MAX} & otherwise \end{cases}$$

The above Equation 4 shows that the point image restoration rate G is set to the restoration strength magnification U (U = G) in a case where the point image restoration rate G is equal to or less than the upper limit U$_{MAX}$ of the restoration strength magnification U and the upper limit U$_{MAX}$ of the restoration strength magnification U is set to the restoration strength magnification U (U = U$_{MAX}$) in a case where the point image restoration rate G exceeds the upper limit U$_{MAX}$ of the restoration strength magnification U.

The value of the sharpening strength magnification V is calculated by finding the sharpening strength magnification V, at which the total sharpness evaluation value satisfies the relationship of "C(U, V, x$_{i,j}$) = C(0, V0, x$_{i,j}$)", in the image processing system shown in Fig. 22. This is equivalent to finding the solution of the primary equation. Accordingly, the automatic strength adjustment unit 52 can easily calculate the sharpening strength magnification V. The degree of difficulty of the calculation of the sharpening strength magnification V depends on the definition of the frequency characteristics F(ω$_x$, ω$_y$|U, V, x$_{i,j}$) of the entire system. In a case where the frequency characteristics F(ω$_x$, ω$_y$|U, V, x$_{i,j}$) become a non-linear function and it is difficult to find the sharpening strength magnification V that strictly satisfies the equation described above, formulation, such as adopting the sharpening strength magnification V that brings the total sharpness evaluation value C(U, V, x$_{i,j}$) closest to the total sharpness evaluation value C(0, V0, x$_{i,j}$), may be performed.

Through a series of processing described above, it is possible to calculate the restoration strength magnification U and the sharpening strength magnification V for maintaining the total sharpness evaluation value C(U, V, x$_{i,j}$) constant.

As described above, according to the present embodiment, the restoration strength magnification U and the sharpening strength magnification V are determined based on the total restoration sharpness (total sharpness evaluation value). Therefore, since a variation in the sharpness of an image (output image) subjected to the point image restoration processing and the sharpening processing is suppressed, it is possible to stabilize the overall resolution or the image quality in the output image.

In particular, by determining the total sharpness evaluation value so that the weighting in a visually main frequency band and/or a position in an image increases, the restoration strength and the sharpening strength are fixed in the visually main frequency band and/or the position in the image. Therefore, it is possible to prevent the sharpness difference from becoming excessive.

In addition, although accurate image restoration processing corresponding to the PSF of the optical system can be realized through the point image restoration processing, artifacts are likely to be generated depending on the imaging scene or the imaging conditions, and the degree of influence on the image quality is high. Therefore, by setting the restoration strength magnification U (restoration rate) of the point image restoration processing preferentially as in the present embodiment, it is possible to effectively improve the overall resolution or image quality. For example, by setting the restoration rate (the point image restoration rate G and the restoration strength magnification U) to be low, it is possible to make artifacts or ringing, which is caused depending on the imaging scene or the like, not noticeable, and it is possible to improve the sharpness by the sharpening processing.

In addition, for the control of the strength adjustment parameter in two image processes (point image restoration processing and sharpening processing), control of "two variables (restoration strength, sharpening strength)" is generally required, and the degree of freedom of the control is set to "2". However, according to the strength adjustment processing according to the present embodiment, the degree of freedom of required control is "1". Therefore, it is possible to determine the appropriate restoration strength and sharpening strength (the restoration strength magnification U and the sharpening strength magnification V) just by determining the point image restoration rate G.

In addition, the restoration strength magnification U for the original image data of the quasi-focus region is adjusted so as to be smaller than the restoration strength magnification U for the original image data of the focus region. As a result, the sharpening strength magnification V for the original image data of the quasi-focus region is adjusted so as to be larger than the sharpening strength magnification V for the original image data of the focus region. In this case, the sharpening strength magnification V for the original image data of the quasi-focus region is increased (sharpening strength is increased). However, even if a frequency band, for which edge enhancement by the outline enhancement processing unit 39 is important, over-correction does not occur. Therefore, the image quality is not degraded.

<Third embodiment>

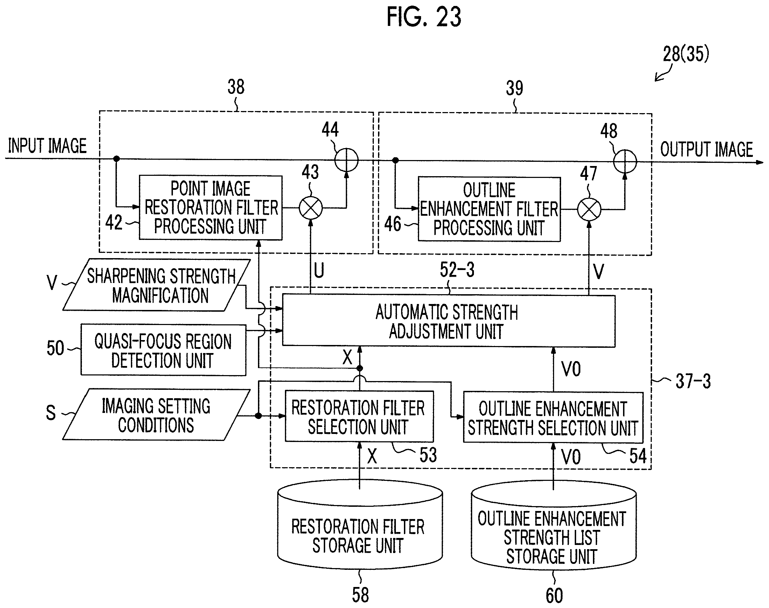

Fig. 23 is a diagram showing the configuration of a processing block that perform point image restoration processing and sharpening processing according to a third embodiment. The same configurations as in the second embodiment shown in Fig. 22 are denoted by the same reference numerals, and the detailed explanation thereof will be omitted.

A sharpness restoration control unit 37-3 according to the third embodiment acquires a sharpening rate in the sharpening processing, and calculates a "restoration rate" in the point image restoration processing based on the total sharpness restoration rate and the sharpening rate.

The sharpening rate (sharpening strength magnification V) is input to the sharpness restoration control unit 37-3 (automatic strength adjustment unit 52-3). The sharpening strength magnification V input to the automatic strength adjustment unit 52-3 is designated in advance by the user before the image processing in the restoration processing unit 38 and the outline enhancement processing unit 39. The method of designating the sharpening strength magnification V by the user is not particularly limited. For example, it is possible to easily determine the sharpening strength magnification V by displaying adjustment means, such as a slider for designating the sharpening strength magnification V, on the user interface 29 (back display unit or the like) so that the user performs an operation through the adjustment means. The sharpening strength magnification V input to the automatic strength adjustment unit 52-3 is basic data for controlling the sharpening strength magnification V of the sharpening processing by the sharpening multiplier 47. Except for a case where the value of the sharpening strength magnification V input to the automatic strength adjustment unit 52-3 is greater than a predetermined threshold value, the sharpening strength magnification V input to the automatic strength adjustment unit 52-3 and the sharpening strength magnification V used in the sharpening multiplier 47 are equal. The case where the sharpening strength magnification V is 0 (zero) corresponds to a case where the sharpening processing is OFF. The sharpening strength magnification V in the sharpening processing may be changed to have consecutive values, or may be changed to have discrete values, or may be changed according to ON/OFF (according to whether or not the predetermined magnification is "0 (zero)"). Alternatively, it is possible to mount a processing circuit or the like that can change the sharpening strength magnification V using an arbitrary method.

In the second embodiment described above, processing of "determining the restoration strength magnification U of the point image restoration processing block first and then calculating the sharpening strength magnification V of the sharpening processing block so that the total sharpness evaluation value $C(U, V, x_{i,j})$ is the same" is performed. On the other hand, in the present embodiment, processing of "determining the sharpening strength magnification V of the sharpening processing block first and then calculating the restoration strength magnification U of the point image restoration processing block so that the total sharpness evaluation value $C(U, V, x_{i,j})$ is the same" is performed.

The sharpening strength magnification V0 in a case where the point image restoration processing is OFF is selected from the sharpening strength magnification V0 stored in the outline enhancement strength list storage unit 60, and is transmitted to the automatic strength adjustment unit 52 from the outline enhancement strength selection unit 54.

The automatic strength adjustment unit 52-3 calculates the restoration strength magnification U that matches the total sharpness evaluation value $C(0, V0, x_{i,j})$ based on the sharpening strength magnification V0 in a case where the point image restoration processing is OFF with the total sharpness evaluation value $C(U, V, x_{i,j})$ based on the sharpening strength magnification V used in the sharpening multiplier 47. The restoration strength magnification U is calculated by finding the restoration strength magnification U at which the total sharpness evaluation value satisfies the relationship of "$C(U, V, x_{i,j}) = C(0, V0, x_{i,j})$"", and this is equivalent to finding the solution of the primary equation. In a case where it is difficult to find the restoration strength magnification U satisfying the equation described above, formulation, such as adopting the restoration strength magnification U that brings the total sharpness evaluation value $C(U, V, x_{i,j})$ closest to the total sharpness evaluation value $C(0, V0, x_{i,j})$, may be performed.

Through a series of processing described above, it is possible to calculate the restoration strength magnification U and the sharpening strength magnification V for maintaining the total sharpness evaluation value $C(U, V, x_{i,j})$ constant.

In addition, based on the information indicating a quasi-focus region in the original image from the quasi-focus region detection unit 50, the automatic strength adjustment unit 52-3 adjusts the sharpening strength magnification V for the original image data of the quasi-focus region so as to be larger than the sharpening strength magnification V for the original image data of the focus region. Accordingly, the restoration strength magnification U for the original image data of the quasi-focus region is adjusted so as to be smaller than the restoration strength magnification U for the original image data of the focus region.

Other configurations are the same as those in the second embodiment shown in Fig. 22.

As described above, also in the present embodiment, the restoration strength magnification U and the sharpening strength magnification V are calculated based on the total restoration sharpness (total sharpness evaluation value). Therefore, since a variation in the sharpness of an output image after the point image restoration processing and the sharpening processing is suppressed, it is possible to stabilize the overall resolution or the image quality.

In particular, the sharpening processing (outline enhancement processing) is stable image processing with little adverse effects compared with the point image restoration processing. Therefore, for example, in a case where a user desires an image with less adverse effects, such as an image with less artifacts, in a case where the effect of the point image restoration processing is hardly noticeable, and in a case where the adverse effects of the point image restoration processing are likely to be noticeable, it is preferable to set the sharpening strength magnification V preferentially as in the present embodiment. In a case where the effect of the point image restoration processing is inherently difficult to realize, such as a case where the optical performance of the lens 16 used in the imaging is good and the influence of the point spread phenomenon of the optical system is very small or a case where the imaging mode (imaging scene) is a night view mode, a portrait mode, or an art filter mode, it is preferable to set the sharpening strength magnification V preferentially as in the present embodiment.

There is a "case where there is a limitation on the sharpening strength but there is no limitation on the point image restoration strength", such as a case where the sharpening strength cannot be increased to a certain level since non-linear processing (clipping processing, limiter processing, or the like), which will be described later, is included in the sharpening processing block. In this case, control for making the total sharpness evaluation value $C(U, V, x_{i,j})$ constant may become easier by determining the sharpening strength magnification V preferentially as in the present embodiment.

<Fourth embodiment>

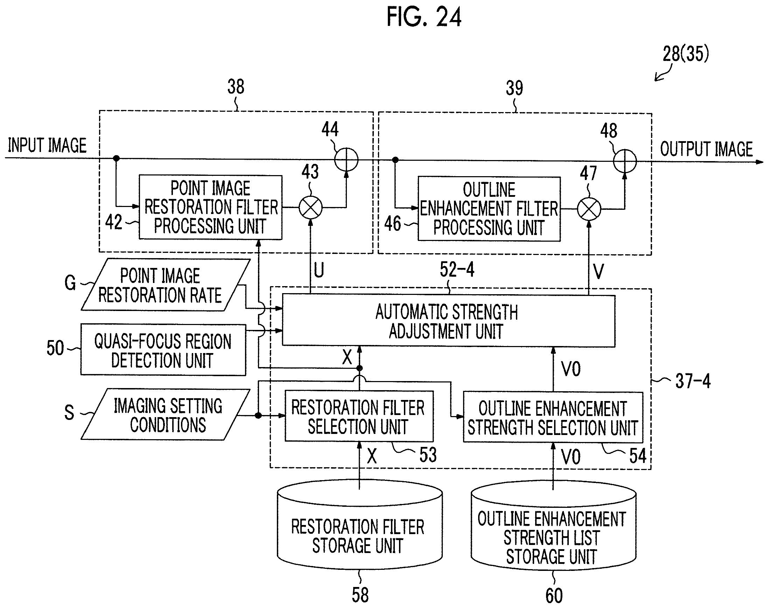

Fig. 24 is a diagram showing the configuration of a processing block that performs point image restoration processing and sharpening processing according to a fourth embodiment. The same configurations as in the second embodiment shown in Fig. 22 are denoted by the same reference numerals, and the detailed explanation thereof will be omitted.

A sharpness restoration control unit 37-4 according to the fourth embodiment calculates the restoration strength magnification U and the sharpening strength magnification V by adjusting the total sharpness restoration rate to the target sharpness restoration at a specific frequency (first frequency).

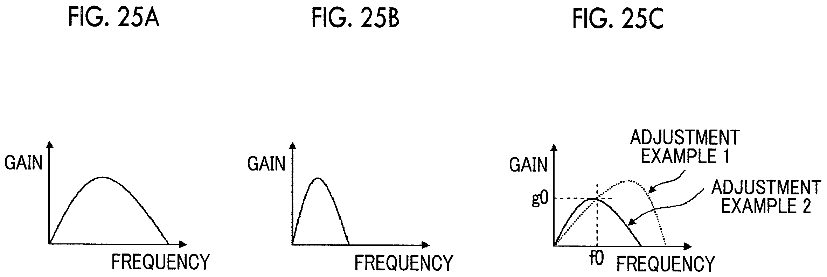

Figs. 25A to 25C are diagrams illustrating the frequency characteristics of image processing, where Fig. 25A shows an example of the "frequency-gain" relationship in the point image restoration processing (point image restoration filter processing unit 42), Fig. 25B shows an example of the "frequency-gain" relationship in the sharpening processing (outline enhancement filter processing unit 46), and Fig. 25C shows an example of the "frequency-gain" relationship in all of the sharpening processing and the point image restoration processing.

In the image processing of the present embodiment, a part of the image processing according to the second embodiment described above is simplified. Focusing on a specific frequency and/or a specific position (screen coordinates) in an image, the "restoration strength magnification U and sharpening strength magnification V" are pinpoint-adjusted for the target frequency and/or the target position (target coordinates).

The target frequency and the target position referred to herein are not particularly limited. For example, a frequency and screen coordinates that are significant in terms of visual characteristics can be set to the target frequency and the target position. For example, the frequency and the screen coordinates that are significant in terms of visual characteristics may be set so as to be focused on the center position of the image. In addition, the range of the target frequency and the range of the target position are not limited, and a single target frequency or a single target position may be present or a plurality of target frequencies or a plurality of target positions may be present.

Specifically, this image processing can be realized by defining the weighting function $w_{i,j}(\omega_x, \omega_y)$ of the equation (refer to "Equation 3") of the total sharpness evaluation value $C(U, V, x_{i,j})$ as follows.

$$(\text{Equation 5}) \quad w_{i,j}(\omega_x, \omega_y) = \delta(\omega_x - \omega_0) \times \delta(\omega_y) \times \delta(i - i_0) \times \delta(j - j_0)$$

In the above equation, "$\delta(x)$" indicates a Kronecker's delta function, and the coordinates (image height) of the target position of the image is assumed to be "$i = i_0, j = j_0$". For example, assuming that the target position of the image is the center position of the image, the weighting function $w_{i,j}(\omega_x, \omega_y)$ in the above Equation 4 is defined so as to obtain a specific gain g0 (total sharpness evaluation value $C(U, V, x_{i,j})$) at a specific frequency f0 at the image center. In the above Equation 5, for the frequency, only a frequency in the x direction is referred to. This is because the shape of the PSF is isotropic at the image center and the frequency characteristics of the restoration filter based on the isotropic PSF are also isotropic and accordingly, it is sufficient to refer to frequencies in a specific direction ("x direction" in the above Equation 4).

By using the weighting function expressed by the above Equation 5, as shown in Figs. 25A to 25C, the gain g0 at the specific frequency f0 is always fixed in the frequency characteristics of the entire image processing system even if the point image restoration rate G is any value.

The frequency characteristics of the entire point image restoration processing (restoration processing unit 38) are determined by the filter processing of the point image restoration filter processing unit 42 and the gain control processing of the restoration multiplier 43, and are determined by adjusting the magnification of the frequency characteristics (refer to Fig. 25A) of the point image restoration filter processing unit 42 based on the restoration strength magnification U. Similarly, the frequency characteristics of the entire sharpening processing (outline enhancement processing unit 39) are determined by the filter processing of the outline enhancement filter processing unit 46 and the gain control processing of the sharpening multiplier 47, and are determined by adjusting the magnification of the frequency characteristics (refer to Fig. 25B) of the outline enhancement filter processing unit 46 based on the sharpening strength magnification V. Therefore, the frequency characteristics (refer to Fig. 25C) of the entire image processing system can be adjusted by controlling the restoration strength magnification U and the sharpening strength magnification V that are applied to the frequency characteristics (refer to Figs. 25A and 25B) of the point image restoration filter processing unit 42 and the outline enhancement filter processing unit 46.

In the adjustment of the restoration strength magnification U and the sharpening strength magnification V in the automatic strength adjustment unit 52-4, there is a limitation that the specific gain g0 is realized at the specific frequency f0, but the number of specific examples of the adjustment is not one. For example, in a case where it is necessary to emphasize high frequency components of the image, the restoration strength magnification U and the sharpening strength magnification V are determined so as to obtain a gain that emphasizes the high frequency components as shown in the "adjustment example 1" of Fig. 25C. On the other hand, in a case where it is necessary to emphasize low to medium frequency components without emphasizing the high frequency components of the image, the restoration strength magnification U and the sharpening strength magnification V at which a gain is applied only to the low to medium frequency components are determined as shown in the "adjustment example 2" of Fig. 25C.

The restoration filter X used in the point image restoration filter processing unit 42 is input to the automatic strength adjustment unit 52-4 from the restoration filter selection unit 53, and the automatic strength adjustment unit 52-4 obtains the frequency characteristics of the restoration filter X. The automatic strength adjustment unit 52-4 also checks the frequency characteristics of the sharpening filter used in the outline enhancement filter processing unit 46. For example, in a case where a single sharpening filter is used in the outline enhancement filter processing unit 46, the restoration filter selection unit 53 may store the frequency characteristics of the sharpening filter in advance. In a case where a sharpening filter used in the outline enhancement filter processing unit 46 is selected from a plurality of filters, the selected sharpening filter may be input to the automatic strength adjustment unit 52-4 and the automatic strength adjustment unit 52-4 may obtain the frequency characteristics of the sharpening filter, or the frequency characteristics of the selected sharpening filter may be input to the automatic strength adjustment unit 52-4.

As described above, according to the present embodiment, it is possible to stabilize the image quality by suppressing the variation in the sharpness in the output image after the point image restoration processing and the sharpening processing. In particular, since the gain g0 at the specific frequency f0 is fixed, it is possible to use a method of "adjusting the sharpness of high frequencies while maintaining the sharpness of low frequencies as a base constant", for example. Therefore, it is possible to flexibly control the frequency characteristics of the entire image processing.

In addition, it is also possible to determine the restoration strength magnification U and the sharpening strength magnification V so as to obtain the fixed total sharpness evaluation value $C(U, V, x_{i,j})$ at a specific position (for example, a center position) in the image. In a case where the center position is a "specific position", it is also possible to perform the point image restoration processing and the sharpening processing for improving the sharpness greatly for a blurred image near the image while preventing a large difference in sharpness from occurring in the image center that the user recognizes easily. The number of "specific positions" referred to herein is not particularly limited, and the number corresponding to several to tens of percents of the number of pixels that form the entire image can also be set to the number of "specific positions".

<Fifth embodiment>

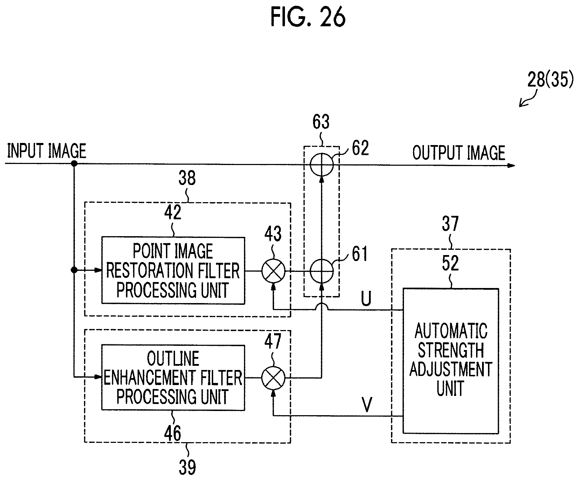

Fig. 26 is a diagram showing the configuration of a processing block that performs point image restoration processing and sharpening processing according to a fifth embodiment. The same configurations as in the second embodiment shown in Fig. 22 are denoted by the same reference numerals, and the detailed explanation thereof will be omitted.

The fifth embodiment is different from the second embodiment, in which the restoration processing unit 38 and the outline enhancement processing unit 39 are connected in series, in that the restoration processing unit 38 and the outline enhancement processing unit 39 according to the fifth embodiment are provided in parallel, image data (input image) is input to each of the restoration processing unit 38 and the outline enhancement processing unit 39, and increment or decrement data of the image data due to the point image restoration processing and increment or decrement data of the image data due to the sharpening processing are added together to generate an output image.

The image processing unit 35 of the present embodiment includes a sharpness restoration adjusting unit 63. The sharpness restoration adjusting unit 63 includes a first adder 61 that adds increment or decrement data of the image data from the restoration processing unit 38 and increment or decrement data of the image data from the outline enhancement processing unit 39 and a second adder 62 that adds the increment or decrement data after the addition, which is output from the first adder 61, and the input image data.

That is, in this example, "point image restoration processing of the point image restoration filter processing unit 42 and the restoration multiplier 43" and "sharpening processing of the outline enhancement filter processing unit 46 and the sharpening multiplier 47" are performed in parallel for image data, and increment or decrement data corresponding to a value of difference from the image data (input image) is calculated in each processing. The increment or decrement data of the image data due to the point image restoration processing and the increment or decrement data of the image data due to the sharpening processing are added by the first adder 61. As a result, increment or decrement data of the image data based on the entire point image restoration processing and sharpening processing is calculated. The "increment or decrement data of the image data due to the entire processing" and image data (input image) are added by the second adder 62. As a result, image data (output image) subjected to the point image restoration processing and the sharpening processing is generated.

Other configurations are the same as those in the second embodiment shown in Fig. 22. For example, a restoration filter selected by the restoration filter selection unit 53 (refer to Fig. 22) is supplied to the point image restoration filter processing unit 42 and the automatic strength adjustment unit 52, and the sharpening strength magnification V0 selected by the outline enhancement strength selection unit 54 is supplied to the automatic strength adjustment unit 52. In addition, the restoration strength magnification U and the sharpening strength magnification V used in the restoration multiplier 43 and the sharpening multiplier 47 are appropriately determined by the automatic strength adjustment unit 52.

The frequency characteristics of the entire image processing system in this example are expressed by the following Equation 6.

$$(\text{Equation } 6)\ F(\omega_x, \omega_y | U, V, x_{i,j}) = 1 + U \times x_{i,j}(\omega_x, \omega_y) + V \times \phi(\omega_x, \omega_y)$$

In the above Equation 6, the frequency characteristics of the restoration processing unit 38 are expressed by "$U \times x_{i,j}(\omega_x, \omega_y)$", and the frequency characteristics of the outline enhancement processing unit 39 are expressed by "$V \times \phi(\omega_x, \omega_y)$". Accordingly, the addition processing of the first adder 61 is based on the frequency characteristics of "$U \times x_{i,j}(\omega_x, \omega_y) + V \times \phi(\omega_x, \omega_y)$", and the addition processing of the second adder 62 is based on the frequency characteristics of "$1 + U \times x_{i,j}(\omega_x, \omega_y) + V \times \phi(\omega_x, \omega_y)$".

As described above, also in the present embodiment, in the same manner as in the case where the restoration processing unit 38 and the outline enhancement processing unit 39 are disposed in series (refer to the first embodiment (Fig. 5)), a variation in the sharpness in the output image after the point image restoration processing and the sharpening processing is suppressed. Therefore, it is possible to stabilize the image quality.

<Sixth embodiment>

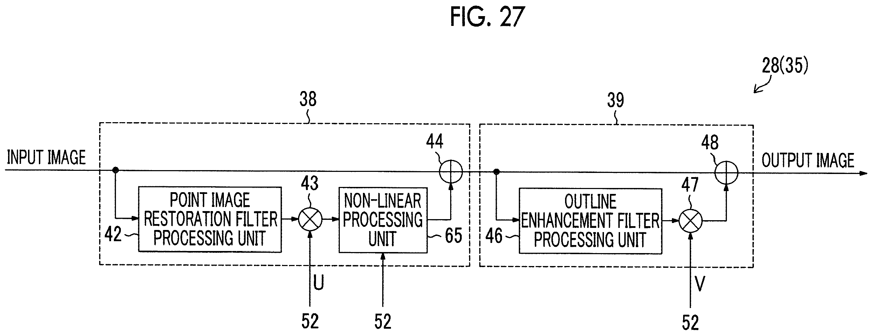

Fig. 27 is a diagram showing the main configuration of a processing block that performs point image restoration processing and sharpening processing according to a sixth embodiment. The same configurations as in the second embodiment shown in Fig. 22 are denoted by the same reference numerals, and the detailed explanation thereof will be omitted.

The image processing unit 35 according to the present embodiment further includes a non-linear processing unit 65 that performs non-linear processing of image data, and non-linear processing is introduced in a two-stage filter processing system (the restoration processing unit 38 and the outline enhancement processing unit 39). Although the non-linear processing unit 65 is included in at least one of the restoration processing unit 38 and the outline enhancement processing unit 39, an example in which the non-linear processing unit is provided in the restoration processing unit 38 will be described below.

In general, the non-linear processing may include not only arithmetic processing of addition, subtraction, multiplication, and division but also processing including the reference of a look-up table (LUT) or conditional branching, for example. Non-linear processing is often performed in order to suppress artifacts or noise. For example, "clipping processing for adjusting the pixel value exceeding the clip threshold value among image signals to the clip threshold value" may be performed as non-linear processing.

The point image restoration processing (restoration processing unit 38) in this example includes a series of processing, such as application of the enhancement magnification to the point image restoration enhancement component extracted by the restoration filter, application of non-linear processing to the point image restoration enhancement component after the application of the enhancement magnification, and combination of the point image restoration enhancement component after the non-linear processing and the original image.

That is, in the present embodiment, image data (input image) is input to the point image restoration filter processing unit 42, filter processing using a restoration filter is performed, and increment or decrement data of the image data due to the point image restoration processing is calculated. The increment or decrement data is input to the restoration multiplier 43 and gain control based on the restoration strength magnification U is performed, the multiplication of the increment or decrement data and the restoration strength magnification U is performed, and increment or decrement data after the multiplication is input to a non-linear processing unit 65.

In the non-linear processing unit 65, clipping processing (non-linear processing) on the input increment or decrement data is performed, and a pixel value exceeding a predetermined clip threshold value among the pieces of increment or decrement data (image data) is adjusted to a clip threshold value. In addition, the clip threshold value may be determined in advance and be stored in the non-linear processing unit 65, or the user may designate the clip threshold value directly or indirectly through the user interface 29. Increment or decrement data of the image data after the clipping processing is added to the image data (input image) by the restoration adder 44 before being input to the point image restoration filter processing unit 42. As a result, image data after the point image restoration processing is calculated.

The clipping processing performed in the non-linear processing unit 65 is processing for limiting image data (gain adjusted increment or decrement data) x so as not to take a value equal to or greater than a clip threshold value $\theta$ ($\geq 0$), as shown in the following Equation 7.

$$\text{(Equation 7)} \quad CLIP(x) = \begin{cases} x & (|x| < \theta) \\ sign(x) \times \theta & (|x| \geq \theta) \end{cases}$$

According to a clipping processing function CLIP(x) expressed by the above Equation 7, in a case where the absolute value of the increment or decrement data x is smaller than the clip threshold value $\theta$ ($|x| < \theta$), the increment or decrement data x is maintained without being adjusted by the clipping processing, and "x" is output from the non-linear processing unit 65. On the other hand, in a case where the absolute value of the increment or decrement data x is equal to or greater than the clip threshold value $\theta$ ($|x| \geq \theta$), the signal component is adjusted by the clipping processing using a signum function, and "sign(x) $\times$ $\theta$" is output from the non-linear processing unit 65.

Although the clip threshold value $\theta$ is given to the non-linear processing unit 65 from the automatic strength adjustment unit 52, it is preferable that the automatic strength adjustment unit 52 adjusts the clip threshold value $\theta$ for the original image data of the quasi-focus region so as to be lower than the clip threshold value $\theta$ for the original image data of the focus region based on the information indicating a quasi-focus region in the original image from the quasi-focus region detection unit 50. According to this, the restoration rate for the original image data of the quasi-focus region is suppressed.

Other configurations are the same as those in the second embodiment shown in Fig. 22. For example, filter processing of the outline enhancement filter processing unit 46 in the outline enhancement processing unit 39, multiplication processing of the sharpening multiplier 47, and addition processing of the sharpening adder 48 are performed in the same manner as in the second embodiment described above.

In this example, as frequency characteristics $F(\omega_x, \omega_y|U, V, x_{i,j})$ in the entire system, it is possible to use frequency characteristics obtained approximately based on the output in a case where a specific input waveform is input to the system (image processing unit 35). That is, in a case where an image processing unit that performs non-linear processing is present in a signal processing system, it is theoretically impossible to calculate the frequency characteristics of the signal processing system accurately, and automatic strength calculation processing of the restoration strength magnification U and the sharpening strength magnification V may not be able to be applied. Accordingly, in a case where non-linear processing is performed, processing for automatically calculating the restoration strength magnification U and the sharpening strength magnification V may be performed by approximately evaluating the internal frequency characteristics from the output wave (output image data) for a specific input waveform (input image data) whose frequency components are ascertained in advance and using the frequency characteristics obtained by the approximate evaluation. In this case, since it is necessary to calculate the frequency characteristics $F(\omega_x, \omega y | U, V, x_{i,j})$ of the entire system, it is necessary to express the frequency response approximation of the system for a specific input waveform using an expression. A specific approximation evaluation method is arbitrary, and the accuracy of the frequency response approximation of the system depends on the specific content of the non-linear processing.

As an example of the frequency response approximation of the system, in the image processing system including the clipping processing shown in Fig. 9, in a case where an input waveform (image signal) whose characteristics are ascertained in advance is used, the input waveform is assumed to be a high contrast step function, and $w_{i,j}(\omega_x, \omega_y)$ is defined so as to have a specific value (total sharpness evaluation value) at the specific frequency f0 as in the above-described embodiment (refer to the above "Equation 5"), the present inventors have empirically learned that the frequency characteristics of the entire image processing system can be approximately expressed by the following Equation 8.

$$\text{(Equation 8)} \quad F(\omega_x, \omega_y | U, V) = \left[1 + \min(U \times \psi(\omega_x, \omega_y), A\right] \times \left[1 + V \times \phi(\omega_x, \omega_y)\right]$$

In the above Equation 8, "A" is a constant depending on the clip threshold value θ and the sharpness (degree of blurring) of the input image signal. In addition, "$\min(U \times \psi(\omega_x, \omega_y), A)$" is a function showing the smaller one of "$U \times \psi(\omega_x, \omega_y)$" and "A".

In this example, the non-linear processing unit 65 is provided in the restoration processing unit 38. However, the non-linear processing unit may be provided only in the outline enhancement processing unit 39, or may be provided in both of the restoration processing unit 38 and the outline enhancement processing unit 39. However, if the non-linear processing is performed in both of the restoration processing unit 38 and the outline enhancement processing unit 39, the frequency response approximation of the entire image processing system becomes complicated. Accordingly, there is a possibility that control to determine the restoration strength magnification U and the sharpening strength magnification V while maintaining the total sharpness evaluation value C(U, V, $x_{i,j}$) at a fixed value will become difficult.

The restoration filter used in the point image restoration processing (point image restoration filter processing unit 42) is designed on the assumption that an input image has expected frequency characteristics (blur characteristics). However, due to the non-linear phenomenon and signal processing in the imaging system or the image processing system disposed beforehand the point image restoration processing and the sharpening processing, image data (input image) may have different frequency characteristics (incorrect frequency characteristics) from the expected frequency characteristics. In this case, artifacts may be generated in the output image. In order to suppress such artifacts, it is preferable to provide the non-linear processing unit 65 after filter processing (point image restoration filter processing unit 42) using a restoration filter.

As described above, according to the present embodiment, even in a case where non-linear processing is performed by the restoration processing unit 38 and/or the outline enhancement processing unit 39, it is possible to accurately calculate the restoration strength magnification U and the sharpening strength magnification V. In particular, it is possible to effectively suppress artifacts by performing the non-linear processing.

<Seventh embodiment>

In a conventional video imaging mode, the imaging setting conditions change with time during the video imaging. Accordingly, if the point image restoration processing is performed by sequentially selecting the restoration filter corresponding to the changed imaging setting conditions, there is a possibility that a variation in the restoration rate or the image sharpness between video frames will be noticeable.

In the present embodiment, in order to suppress over-correction while maintaining the resolution of the original image data in a quasi-focus region and prevent the variation in the restoration rate or the sharpness between video frames, control of the point image restoration processing strength and the sharpening processing strength is performed while maintaining the total sharpness evaluation value at a predetermined value during video recording. That is, in the embodiment, the total sharpness evaluation value is not changed for each of the imaging setting conditions.

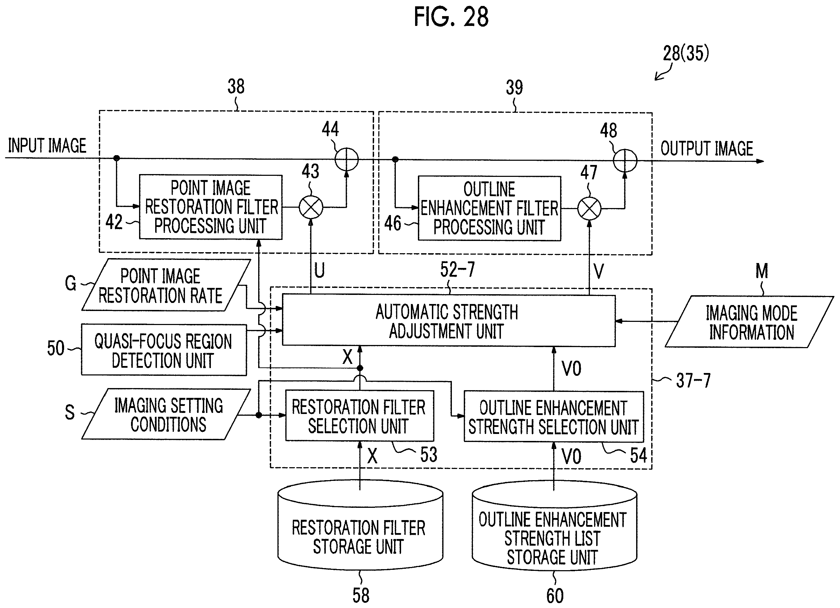

Fig. 28 is a diagram showing the configuration of a processing block that performs point image restoration processing and sharpening processing according to the seventh embodiment. The same configurations as in the second embodiment shown in Fig. 22 are denoted by the same reference numerals, and the detailed explanation thereof will be omitted.

The sharpness restoration control unit 37-7 (automatic strength adjustment unit 52-7) according to the seventh embodiment acquires imaging mode information M when acquiring image data (input image), and maintains the total sharpness restoration rate constant in a case where the imaging mode information M indicates a video recording mode. The "maintain the total sharpness restoration rate constant" is not limited to a case where the total sharpness restoration rate is maintained at a predetermined value, and includes a case where the total sharpness restoration rate is maintained in a range not affecting the image quality. In a case where the total sharpness restoration rate is maintained in the range not affecting the image quality, the degree of variation in the total sharpness restoration rate is preferably 10% or less, and more preferably 5% or less.

The imaging mode information M is input to the automatic strength adjustment unit 52-7 using an arbitrary method. For example, in a case where a "mode switching unit (user interface 29) capable of performing switching between the video recording mode and the still image recording mode" is provided in the digital camera 10 (formed by the lens unit 12 and the camera body 14), the imaging mode information M selected by the user may be transmitted from the mode switching unit to the body controller 28 (automatic strength adjustment unit 52-7). The imaging mode information M may be information indicating directly or indirectly whether or not an image to be processed is a video or a still image, or information indicating "video/still image" that is included in the image to be processed may be used as the imaging mode information M.

In a case where the input imaging mode information M indicates a video recording mode, the automatic strength adjustment unit 52-7 determines the restoration strength magnification U and the sharpening strength magnification V using a common total sharpness evaluation value (total sharpness restoration rate) between frames of a plurality of pieces of image data (video data) that form a video. That is, in the case of determining the restoration strength magnification U and the sharpening strength magnification V for a video (frames) captured in the video recording mode, the total sharpness evaluation value (total sharpness restoration rate) is fixed without being changed for each of the imaging setting conditions even if the imaging setting conditions are changed between frames. The total sharpness evaluation value (total sharpness restoration rate) that is always used for the moving image can be determined using an arbitrary method. For example, a total sharpness evaluation value (total sharpness restoration rate) corresponding to the imaging setting conditions of the specific frame (for example, an initial frame) that forms a video may be used.

In a case where the imaging mode information M indicates the video recording mode, the automatic strength adjustment unit 52-7 (sharpness restoration control unit 37-7) may set the restoration strength magnification U (restoration rate) of the point image restoration processing to be smaller than that in a case where the imaging mode information M indicates the still image recording mode. The point image restoration processing of the restoration processing unit 38 is image restoration processing based on the PSF, and is excellent image quality improvement processing capable of effectively improving the image quality in a case where it is possible to accurately ascertain the PSF, but is processing that can cause the degradation of image quality by overcorrection in a case where it is not possible to accurately ascertain the PSF. Although a time corresponding to the point image restoration processing using a restoration filter that faithfully reflects the PSF, processing a plurality of frame images that form a video within the limited time is also required in the video recording mode. In addition, since it is also required to maintain the continuity between frames in the video, it is not necessarily desirable that the image quality is significantly changed between consecutive frames. Therefore, in the video recording mode, by making the restoration strength magnification U (restoration rate) relatively small in order to reduce the degradation of image quality due to overcorrection or the like or the change between frames, it is possible to generate an overall satisfactory video. In addition, since the reduction in the restoration strength magnification U is compensated for by the sharpening strength magnification V, it is possible to obtain a clear video by the sharpening processing even if the degree of restoration by the point image restoration processing is relatively small.

As described above, according to the present embodiment, even if the imaging setting conditions are changed during video imaging and the restoration rate of the point image restoration processing corresponding to imaging setting conditions is changed, it is possible to suppress a variation in the sharpness of a restored video since the total sharpness evaluation value (total sharpness restoration rate) is fixed.

<Modification example of the seventh embodiment>

In a modification example of the seventh embodiment, the restoration rate or the sharpness between video frames is suppressed so as not to be greatly changed for a change in the imaging conditions during the video imaging.

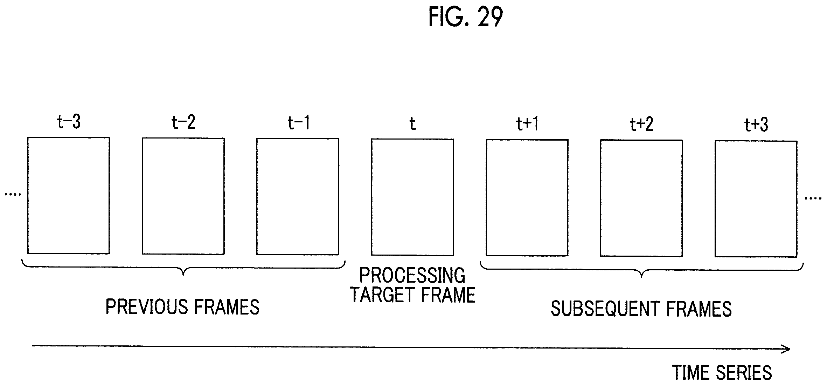

Fig. 29 is a diagram illustrating a "processing target frame" and a "reference frame" among time-series video frames.

At the time of video imaging, a subject is consecutively imaged at a predetermined frame rate through the optical system 12 and the imaging element 26, and image data of a motion picture formed by a plurality of frames that are consecutive in time series is acquired. Here, the frame rate is the number of frames per unit time (the number of images, the number of frames), and is generally expressed by the number of frames (unit: frame per second (fps)) generated for one second. For example, the digital camera 10 of the present embodiment generates 30 images for one second in a case where the frame rate is 30 fps, and generates 60 images for one second in a case where the frame rate is 60 fps.

A motion picture is formed by a plurality of frames that are consecutive in time series. For example, a motion picture is the meaning including a record motion picture and a live view image.

Fig. 29 shows a case of performing restoration processing for a frame (t) captured at time t. In this case, the frame (t) is a processing target frame. A frame (t-1) captured at time t-1, a frame (t-2) captured at time t-2, and a frame (t-3) captured at time t-3 are frames (previous frames) before the processing target frame in time series. A frame (t+1) captured at time t+1, a frame (t+2) captured at time t+2, and a frame (t+3) captured at time t+3 are frames (subsequent frames) after the processing target frame in time series. In Fig. 29, for convenience of explanation, only three previous frames and three subsequent frames with respect to the processing target frame are described. In practice, however, a number of frames are present according to the imaging time.

A reference frame may include at least one frame of previous frames or subsequent frames. A single reference frame may be used, or a plurality of reference frames may be used. For example, in the case of a single reference frame, it is preferable that the frame (t+1), which is a subsequent frame of the processing target frame (frame (t)), is selected as a reference frame. In addition, for example, in the case of a plurality of reference frames, it is preferable that the subsequent frame (t+1) and the previous frame (t-1) of the processing target frame (frame (t)) are selected.

In Fig. 29, the previous frame (t-1) is a frame immediately before the processing target frame in time series, and the subsequent frame (t+1) is a frame immediately after the processing target frame in time series. The frame (frame (t-1)) immediately before the processing target frame in time series or the frame (frame (t+1)) immediately after the processing target frame in time series may be selected as a reference frame.

As a method of selecting a reference frame from a plurality of frames that are consecutive in time series, various methods are used. For example, a method in which a user designates a method of selecting a reference frame in advance through the user interface 29 can be considered as a method of selecting a reference frame. In addition, for example, a method of selecting a reference frame may be determined in advance.

The sharpness restoration control unit 37 (Fig. 4 or the like) adjusts the content of the restoration processing of the processing target frame based on the imaging information of the reference frame. In order to realize restoration processing that is continuous between frames, the sharpness restoration control unit 37 adjusts the content of the restoration processing based on the imaging information of the reference frame using various methods.

In addition, the sharpness restoration control unit 37 can adjust the content of the restoration processing of the processing target frame based on the imaging information of the reference frame and the imaging information of the processing target frame. By performing the restoration processing of the processing target frame according to the imaging information of the processing target frame and the imaging information of the reference frame, it is possible to perform restoration processing, which is continuous between the processing target frame and the reference frame, and to perform restoration processing suitable for the processing target frame.

Next, the method of adjusting the content of the restoration processing performed by the sharpness restoration control unit 37 will be described through a specific example.

The sharpness restoration control unit 37 can adjust the content of the restoration processing based on the mode for the imaging information including the imaging conditions information of the reference frame.

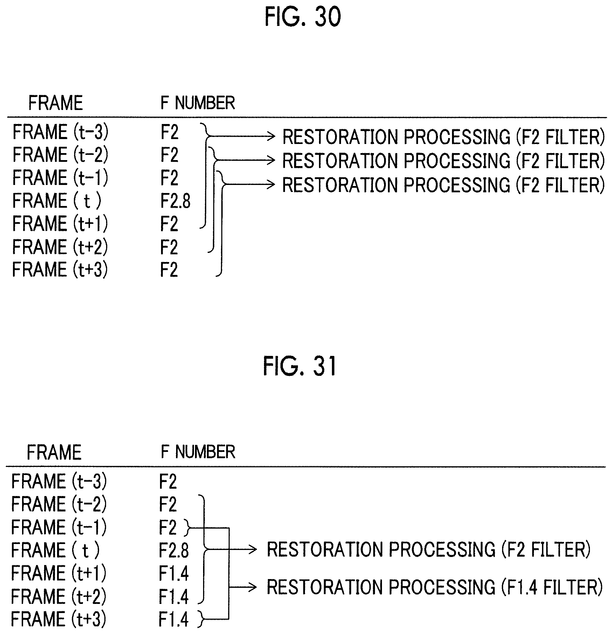

Fig. 30 shows a case where a F number is given as imaging conditions information (imaging information) in each of the frames (t-3) to (t+3) described in Fig. 29. Specifically, in the case shown in Fig. 30, the frame (t-3) is captured at the F number F2, the frame (t-2) is captured at the F number F2, the frame (t-1) is captured at the F number F2, the frame (t) is captured at the F number F2.8, the frame (t+1) is captured at the F number F2, the frame (t+2) is captured at the F number F2, and the frame (t+3) is captured at the F number F2.

A case will be described in which a processing target frame is the frame (t-1) and reference frames are the frame (t-3), the frame (t-2), the frame (t), and the frame (t+1). In this case, the frame (t-3), the frame (t-2), the frame (t-1), and the frame (t+1) are captured at the F number F2, and the frame (t) is captured at the F number F2.8. Accordingly, in the processing target frame and the reference frames, the mode of the F numbers as imaging conditions information is F2. Then, in the case of performing restoration processing for the processing target frame (frame (t-1)), a restoration filter for frames captured at the F number F2 is used.

Similarly, even in a case where processing target frames are the frame (t) and the frame (t+1), the mode of F numbers of five frames including the processing target frames is F2. Accordingly, for any of the processing target frames, a restoration filter for frames captured at the F number F2 is used.

Fig. 31 shows an example of selecting another reference frame. The frame (t-3) is captured at the F number F2, the frame (t-2) is captured at the F number F2, the frame (t-1) is captured at the F number F2, the frame (t) is captured at the F number F2.8, the frame (t+1) is captured at the F number F1.4, the frame (t+2) is captured at the F number F1.4, and the frame (t+3) is captured at the F number F1.4.

In a case where the frame (t-2), the frame (t-1), the frame (t+1), and the frame (t+2) are reference frames and the frame (t) is a processing target frame, the frame (t-2) and the frame (t-1) are captured at the F number F2, and the frame (t+1) and the frame (t-2) are captured at the F number F 1.4. Accordingly, the mode of the imaging conditions information is two of the F number F2 and the F number F1.4. In this case, since the imaging conditions information of the processing target frame is the F number F2.8, the imaging conditions information of the processing target frame does not correspond to the mode. Accordingly, the mode (in this case, the F number F1.4) of the imaging conditions information of the reference frames after the processing target frame in time series is adopted.

In a case where the frame (t-1) and the frame (t+3) are reference frames, the mode of the imaging conditions information is two of F2 and F1.4. However, since the frame (t-1) is closer to the processing target frame in time series than the frame (t+3) is, the F number F2 that is the imaging conditions information of the frame (t-1) is adopted as the mode.

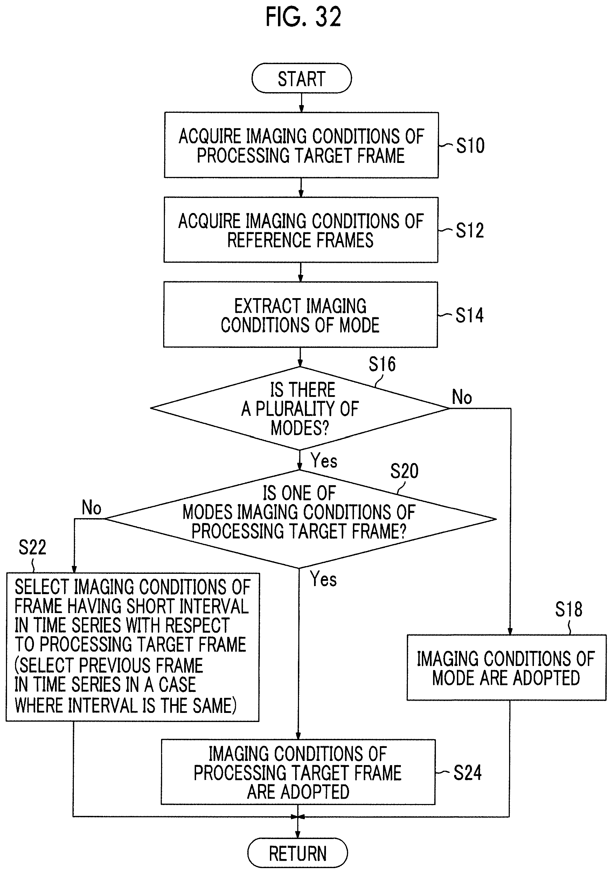

Fig. 32 is a diagram showing the operation flow when the sharpness restoration control unit 37 determines the mode of imaging conditions information of reference frames (imaging information).

First, the sharpness restoration control unit 37 acquires the imaging conditions information of a processing target frame (step S10). Then, the sharpness restoration control unit 37 (restoration filter selection unit 53) acquires the imaging conditions information of reference frames (step S12). The restoration filter selection unit 53 can acquire the imaging conditions information of the processing target frame using various methods. For example, the restoration filter selection unit 53 can acquire the imaging conditions information of the processing target frame from the device control unit 34 (Fig. 2). Then, the sharpness restoration control unit 37 extracts the mode from the imaging conditions information of the reference frames (step S14). Then, the sharpness restoration control unit 37 determines whether there is a single mode or a plurality of modes. In a case where there is one mode (in the case of No in step S16), the imaging conditions of the mode are adopted (step S18), and the content of restoration processing is adjusted.

On the other hand, in a case where there is a plurality of modes (in the case of Yes in step S16), it is determined whether or not one of the plurality of modes is the imaging conditions information of the processing target frame. Then, in a case where one of the plurality of modes is not the imaging conditions information of the processing target frame (in the case of No in step S20), the sharpness restoration control unit 37 selects the mode of a frame, which is close to the processing target frame in time series, among the plurality of modes (step S22). In a case where all of the plurality of modes have the same interval in time series for the processing target frame, the sharpness restoration control unit 37 selects a mode including a frame before the processing target frame in time series (step S22). Thus, continuity in time series is improved by selecting the mode including a frame before the processing target frame in time series.

On the other hand, in a case where one of the plurality of modes is the imaging conditions information of the processing target frame (in the case of Yes in step S20), the sharpness restoration control unit 37 adopts the imaging conditions information of the processing target frame as the mode (step S24). Then, processing is performed for the next processing target frame.

Next, another method of adjusting the content of the restoration processing performed by the sharpness restoration control unit 37 will be described through a specific example.

The sharpness restoration control unit 37 (restoration filter selection unit 53) may determine the imaging conditions information as described above based on the imaging conditions information of the processing target frame and the imaging conditions information of the reference frame, and acquire a corresponding restoration filter from the restoration filter storage unit 58 using the determined imaging conditions information. Alternatively, the sharpness restoration control unit 37 (restoration filter selection unit 53) may read a restoration filter corresponding to the imaging conditions information of the processing target frame and a restoration filter corresponding to the imaging conditions information of the reference frame from the restoration filter storage unit 58, and acquire a new restoration filter based on the plurality of read restoration filters. The restoration filter selection unit 53 can acquire a new restoration filter from the filter corresponding to the imaging conditions information of the processing target frame and the filter corresponding to the imaging conditions information of the reference frame using various methods. For example, it is possible to acquire a new restoration filter by weighted averaging of the frame corresponding to the imaging conditions information of the processing target frame, and the frame corresponding to the imaging conditions information of the reference frame.

Therefore, since a change in the restoration filter applied to the processing target frame for changes in the imaging conditions during the video imaging is suppressed, the restoration rate or the sharpness between video frames is not greatly changed.

<Eighth embodiment>

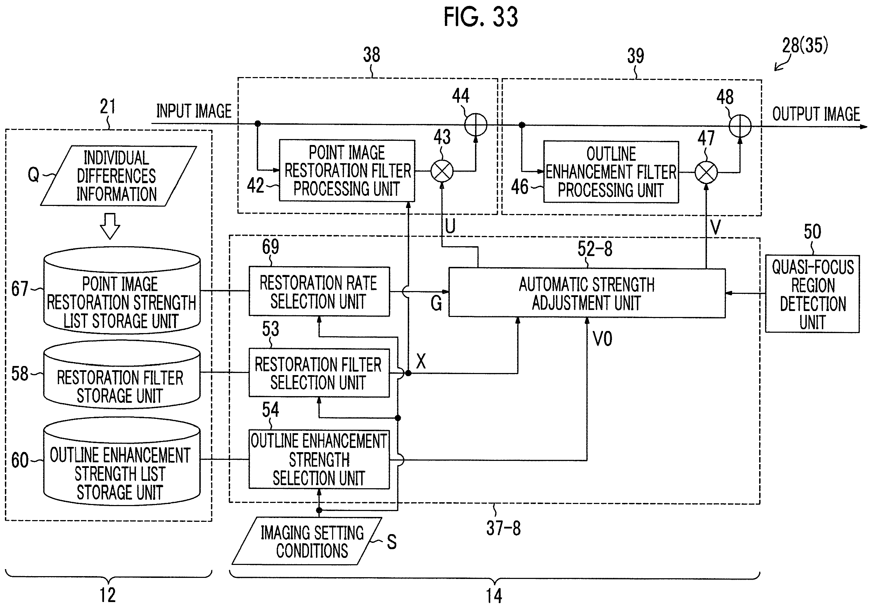

Fig. 33 is a diagram showing the configuration of a processing block that performs point image restoration processing and sharpening processing according to an eighth embodiment. The same configurations as in the second embodiment shown in Fig. 22 are denoted by the same reference numerals, and the detailed explanation thereof will be omitted.

In the present embodiment, when the lens unit (optical system) 12 is mounted, the point image restoration rate G reflecting the individual differences information of the lens unit 12 is input to an automatic strength adjustment unit 52-8 from the lens unit 12. Accordingly, the automatic strength adjustment unit 52-8 determines the restoration strength magnification U based on the optical characteristics information including the individual differences information of the optical system. In addition, the point image restoration rate G input to the automatic strength adjustment unit 52-8 is the point image restoration rate G before being adjusted according to the detection result of the quasi-focus region detection unit 50, and corresponds to image data of the focus region.

In the lens unit 12 (in particular, an optical system, such as the lens 16), there are individual differences in the optical characteristics due to manufacturing error or the like. Due to such individual differences, the PSF is different for each lens unit 12 strictly speaking. Accordingly, if the point image restoration processing is performed ignoring the individual differences of the lens unit 12 (optical system), the degree of restoration may be different even for images captured by using the same type of lens unit 12, and the appearance aspects of artifacts in the restored images may also be different.

Ideally, the point image restoration processing is performed based on the PSF that faithfully reflects the optical characteristics of the lens unit 12, and no artifacts are generated in restored images. In practice, however, due to the individual differences of the lens unit 12, the influence of the PSF in an image to be processed does not match the PSF that forms the basis of the restoration filter used in the point image restoration processing. Accordingly, artifacts may be generated in the restored image. As a method for preventing artifacts caused by individual differences, there is a method of suppressing the degree of restoration by setting the restoration strength magnification U in the point image restoration processing to a small value. However, if the restoration strength magnification U is reduced, the image is not sufficiently restored. Accordingly, desired sharpness cannot be obtained. As a method for preventing such a reduction in the sharpness, adjusting the sharpening strength magnification V for realizing the desired total sharpness in a sequential manner for each lens unit 12 may be considered. However, such sequential adjustment is time-consuming work, which is inconvenient.

In the present embodiment, over-correction is suppressed while maintaining the resolution of the original image data in a quasi-focus region. In addition, the restoration strength of the point image restoration processing is adjusted for each lens (optical system), and the determination of the restoration strength magnification U and the sharpening strength magnification V is automated.

That is, in the present embodiment, the lens unit storage unit 21 includes the restoration filter storage unit 58 and the outline enhancement strength list storage unit 60, and further includes a point image restoration strength list storage unit 67. In the point image restoration strength list storage unit 67, the point image restoration rate G unique to the lens unit 12 (optical system) is stored. The point image restoration rate G is a value reflecting individual differences information Q of the lens unit 12. In addition, the restoration filter X corresponding to the type of the lens unit 12 (optical system) is stored in the restoration filter storage unit 58. The restoration filter X is used in common for the same type of lens unit 12 (optical system).

When the lens unit 12 is replaced (mounted), the point image restoration rate G stored in the point image restoration strength list storage unit 67 is read by a restoration rate selection unit 69 provided in the sharpness restoration control unit 37, and is supplied to the automatic strength adjustment unit 52-8. That is, the restoration rate selection unit 69 reads the point image restoration rate G corresponding to the imaging setting conditions S from the point image restoration strength list storage unit 67, and supplies the point image restoration rate G to the automatic strength adjustment unit 52-8. Similar to the second embodiment described above, the automatic strength adjustment unit 52-8 determines the restoration strength magnification U from the point image restoration rate G that is supplied, and determines the sharpening strength magnification V based on the restoration strength magnification U and the total sharpness evaluation value (total sharpness restoration rate).

In the present embodiment, since the restoration filter storage unit 58 is provided in the lens unit storage unit 21 (lens unit 12), the restoration filter selection unit 53 reads the restoration filter X from the restoration filter storage unit 58 of the new lens unit 12 if the lens unit 12 is replaced (mounted). Therefore, by storing the restoration filter X, which reflects the PSF of the mounted lens unit 12 (optical system), in the restoration filter storage unit 58, the restoration filter storage unit 58 that stores the restoration filter X reflecting the PSF of the lens unit 12 is mounted in each lens unit 12.

Accordingly, even if a plurality of types of lens units 12 can be mounted in the camera body 14, the restoration filter X optimized for the mounted lens unit 12 can be supplied to the point image restoration filter processing unit 42. In addition, according to the present embodiment, since the point image restoration rate G reflecting the individual differences information Q of the lens unit 12 (optical system) mounted in the camera body 14 is supplied to the automatic strength adjustment unit 52, it is possible to prevent artifacts caused by PSF mismatch due to the individual differences of the optical system. In particular, in the present embodiment, the point image restoration rate G reflecting the individual differences information Q is stored in the lens unit storage unit 21 (lens unit 12). Therefore, even if the lens unit 12 mounted in the camera body 14 is replaced, it is possible to determine the restoration strength magnification U and the sharpening strength magnification V according to the point image restoration rate G based on the individual differences information Q of the replaced lens unit 12. Since the restoration strength magnification U and the sharpening strength magnification V that are determined in each filter processing are used, it is possible to suppress over-correction while maintaining the resolution of the original image data in a quasi-focus region. In addition, it is possible to obtain the desired total sharpness while performing restoration processing reflecting the individual differences.

In addition, although the point image restoration strength list storage unit 67, the restoration filter storage unit 58, and the outline enhancement strength list storage unit 60 are provided in the lens unit 12 in the embodiment described above, these may be provided in the camera body 14. In a case where these storage units are provided in the camera body 14, it is preferable that data corresponding to the mounted lens unit 12 is downloaded from external devices (the computer 92, the server 97, and the like) to the point image restoration strength list storage unit 67, the restoration filter storage unit 58, and the outline enhancement strength list storage unit 60.

<Ninth embodiment>

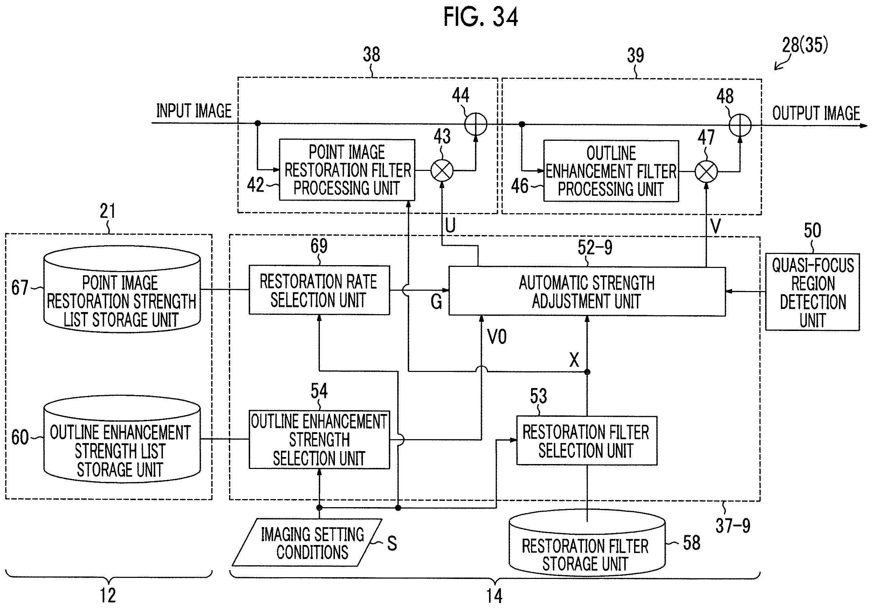

Fig. 34 is a diagram showing the configuration of a processing block that performs point image restoration processing and sharpening processing according to a ninth embodiment. The same configurations as in the eighth embodiment shown in Fig. 33 are denoted by the same reference numerals, and the detailed explanation thereof will be omitted.

In the above eighth embodiment shown in Fig. 33, the restoration filter X is selected for each of the imaging setting conditions and is used by the point image restoration filter processing unit 42. In the ninth embodiment shown in Fig. 34, the same restoration filter X is used in the point image restoration filter processing unit 42 under a plurality of imaging setting conditions (optical system types).

The processing load in the point image restoration processing using a restoration filter corresponding to the PSF of each of the imaging setting conditions is relatively large. In the present embodiment, however, the load of the point image restoration processing is reduced by setting a predetermined allowable range and sharing the restoration filter X under a plurality of imaging setting conditions within the allowable range. However, if the imaging setting conditions (optical system types) are different, the PSF is also different strictly speaking. In a case where the restoration filter X is shared under a plurality of imaging setting conditions, the appearance aspect of artifacts or the image restoration rate (image recovery rate) in the restored image changes according to the imaging setting conditions.

In the present embodiment, in order to prevent artifacts or the like that are changed according to the optical system type, the point image restoration rate G is set to be relatively weak in the lens unit 12, by which artifacts are likely to appear strongly, by changing the point image restoration rate G of the point image restoration processing according to the type of the lens unit 12 attached to the camera body 14. In order to prevent the phenomenon that a desired total sharpness restoration rate cannot be obtained since the sharpness is varied by setting the point image restoration rate G to be relatively weak, automatic adjustment of the restoration strength magnification U and the sharpening strength magnification V by an automatic strength adjustment unit 52-9 is used.

That is, in the present embodiment, the point image restoration strength list storage unit 67 and the outline enhancement strength list storage unit 60 are provided in the lens unit 12 (lens unit storage unit 21), but the outline enhancement strength selection unit 54 is provided in the camera body 14. The restoration filter selection unit 53 selects the restoration filter X corresponding to the imaging setting conditions S from the outline enhancement strength selection unit 54 regardless of the lens unit 12 mounted in the camera body 14, and supplies the restoration filter X to the point image restoration filter processing unit 42 and the automatic strength adjustment unit 52.

On the other hand, the point image restoration rate G supplied to the automatic strength adjustment unit 52-9 is determined for each lens unit 12 (optical system). That is, the restoration rate selection unit 69 reads the point image restoration rate G corresponding to the imaging setting conditions S from the point image restoration strength list storage unit 67 of the lens unit storage unit 21, and supplies the point image restoration rate G to the automatic strength adjustment unit 52-9.

The list of the point image restoration rate G stored in the point image restoration strength list storage unit 67 and the list of the sharpening strength magnification V0 stored in the outline enhancement strength list storage unit 60 are stored after being calculated in advance for each lens unit 12 (optical system).

In the present embodiment, since the common restoration filter X is used in the point image restoration filter processing unit 42 regardless of the type of the lens unit 12, the point image restoration rate G and the sharpening strength magnification V0 (sharpening strength magnification V0 in a case where the point image restoration processing is OFF) considering the sharing of the restoration filter X are transmitted to the automatic strength adjustment unit 52-9. Accordingly, the restoration rate selection unit 69 may perform arbitrary adjustment processing considering the "sharing of the restoration filter X" for the point image restoration rate G selected from the point image restoration strength list storage unit 67, and supply the point image restoration rate G after the adjustment to the automatic strength adjustment unit 52-9. Similarly, the outline enhancement strength selection unit 54 may perform arbitrary adjustment processing considering the "sharing of the restoration filter X" for the sharpening strength magnification V0 selected from the outline enhancement strength list storage unit 60, and supply the sharpening strength magnification V0 after the adjustment to the automatic strength adjustment unit 52-9.

As described above, according to the present embodiment, the point image restoration rate G is determined in advance taking into consideration that the same restoration filter is used for a plurality of imaging setting conditions (optical system type), and the restoration strength magnification U and the sharpening strength magnification V are calculated. Therefore, it is possible to suppress over-correction while maintaining the resolution of the original image data in a quasi-focus region. In addition, it is possible to prevent artifacts in the restored image due to the sharing of the restoration filter. As a result, it is possible to improve the sharpness of an image by the point image restoration processing and the sharpening processing.

In the example described above, a restoration filter is used in common for "a plurality of optical systems". However, the imaging setting conditions that are criteria for the sharing of the restoration filter is not limited to the type of the optical system, and the restoration filter may be used in common for other imaging setting conditions (for example, zoom information or the like).

For example, in a case where the same restoration filter is used for a plurality of zoom magnifications (in particular, optical zoom magnification between the optical zoom magnification and the digital zoom magnification), the restoration filter selection unit 53 selects an appropriate restoration filter X based on the zoom information included in the imaging setting conditions S, and supplies the selected restoration filter X to the point image restoration filter processing unit 42 and the automatic strength adjustment unit 52-9. On the other hand, the restoration rate selection unit 69 reads the point image restoration rate G corresponding to the imaging setting conditions S from the point image restoration strength list storage unit 67, and supplies the point image restoration rate G to the automatic strength adjustment unit 52-9. In addition, the quasi-focus region detection unit 50 supplies the information indicating the quasi-focus region in the original image to the automatic strength adjustment unit 52-9.

The automatic strength adjustment unit 52-9 determines the restoration strength magnification U and the sharpening strength magnification V based on the restoration filter X, the point image restoration rate G, and the information indicating the quasi-focus region that have been supplied. In this case, the point image restoration rate G or the sharpening strength magnification V0 (maximum outline enhancement strength) taking into consideration that the common restoration filter is used for plurality of zoom magnifications may be supplied to the automatic strength adjustment unit 52. For example, the restoration rate selection unit 69 and the outline enhancement strength selection unit 54 may read or determine the point image restoration rate G and the sharpening strength magnification V0 (maximum outline enhancement strength) that are based on the use of the common restoration filter.

<Other modification examples>

The embodiments described above are just illustrative, and it is also possible to apply the present invention to other configurations.

At least in a case where the "F number indicates that the diaphragm is more opened than the diaphragm expressed by the first threshold value", the sharpness restoration control unit 37 (for example, refer to Fig. 22) can acquire one of the restoration rate and the sharpening rate, and can calculate the other one of the restoration rate and the sharpening rate based on the total sharpness restoration rate. For example, in a case where the F number is on the open side, automatic adjustment control of the restoration strength magnification U and the sharpening strength magnification V described above may be performed. That is, the sharpness restoration control unit 37 (for example, refer to Fig. 22) acquires the F number of the optical system (lens unit 12) when acquiring image data, and compares the F number with the first threshold value. In a case where the F number is set, the sharpness restoration control unit 37 may acquire one of the restoration rate and the sharpening rate and calculate the other one of the restoration rate and the sharpening rate based on the total sharpness restoration rate only in a case where the acquired F number is equal to or less than the first threshold value (diaphragm open side). In general, the restoration rate of the point image restoration processing and the appearance aspect of artifacts vary depending on the F number. In particular, artifacts are likely to be noticeable in image data captured with the open side F number. Therefore, by performing image processing based on the point image restoration processing and the sharpening processing according to each of the embodiments described above only for the image data captured by the open side diaphragm, it is possible to improve the image sharpness by the sharpening processing while suppressing artifacts that easily appear at the open side F number. In this case, the image processing based on the point image restoration processing and the sharpening processing according to each of the embodiments described above may be applied at least to the image data captured with the open side F number at which artifacts are likely to be noticeable. However, the image processing based on the point image restoration processing and the sharpening processing according to each of the embodiments described above may be applied to image data captured with other F numbers, or may be applied only to image data captured with the open side F number.

The F number is included in the "imaging setting conditions". In the configuration shown in Fig. 34, since the imaging setting conditions S are supplied to the automatic strength adjustment unit 52-9, "comparison between the F number and the first threshold value" and "determination of the point image restoration rate G (restoration rate) and the sharpening strength magnification V (sharpening rate)" can be performed in the automatic strength adjustment unit 52-9.

The "first threshold value" can be set to an arbitrary value (F number), and may be determined according to other imaging setting conditions, such as a zoom. For example, a threshold value corresponding to the F number in the range of F3.5 to F6.3 may be set to the "first threshold value".

In the embodiments described above, an example is shown in which the sharpening strength magnification V0 (total sharpness restoration rate) in a case where the point image restoration processing is OFF is determined based on the imaging setting conditions S by the outline enhancement strength selection unit 54. However, the sharpening strength magnification V0 (total sharpness restoration rate) may be determined based on the designation of the user through the user interface 29.

In addition, in each of the embodiments described above, an example has been described in which the restoration strength magnification U and the sharpening strength magnification V are automatically adjusted and calculated in the digital camera 10. However, the automatic adjustment and calculation may be performed in advance by the manufacturer before shipment, and all parameters of the calculated restoration strength magnification U and the sharpening strength magnification V may be stored in the digital camera 10 (the lens unit storage unit 21, the main body storage unit 31, or the like). For example, the digital camera 10 can store a table in which the "restoration strength magnification U and the sharpening strength magnification V" are matched with the "imaging setting conditions S", and the automatic strength adjustment unit 52 can calculate the restoration strength magnification U and the sharpening strength magnification V from the imaging setting conditions S by referring to the table. In this case, a parameter generating method for generating the parameters used in the digital camera 10 (image processing unit) includes a "step of acquiring the total sharpness restoration rate based on the restoration rate of the image data by the point image restoration processing and the sharpening rate of the image data by the sharpening processing" and a "step of acquiring one of the restoration rate and the sharpening rate and calculating the other one of the restoration rate and the sharpening rate based on the total sharpness restoration rate". These steps can be executed in the same manner as in the automatic strength adjustment unit 52-2 according to the second embodiment described above, for example.

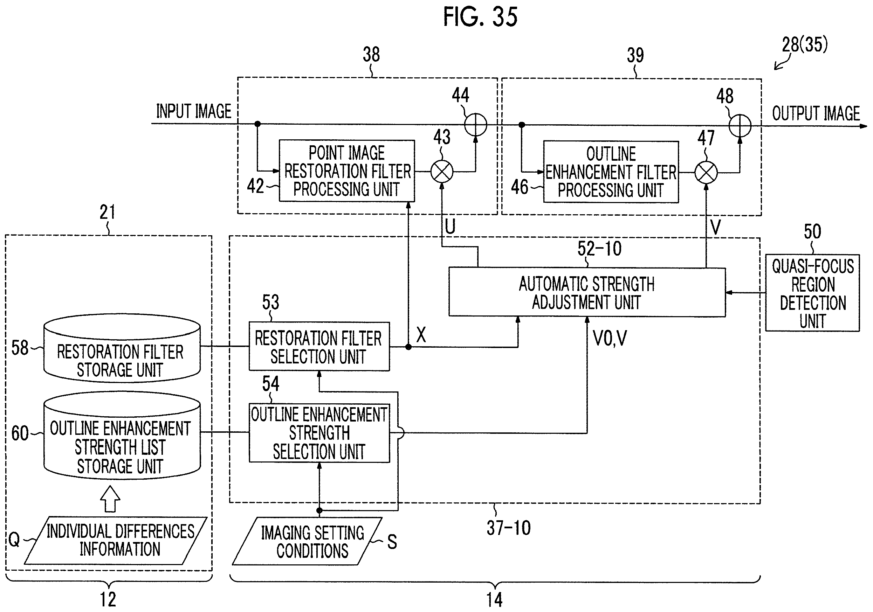

The embodiments described in this specification may be appropriately combined with each other, and arbitrary ones of the second to ninth embodiments and the modification examples may be combined with each other. For example, in the third embodiment (refer to Fig. 23), the outline enhancement strength selection unit 54 may acquire the optical characteristics information of the lens unit 12 mounted in the camera body 14, and may determine the sharpening strength magnification V based on the optical characteristics information (lens type information of the optical system, individual differences information of the optical system, imaging setting conditions, and the like). In this case, the outline enhancement strength selection unit 54 can acquire the optical characteristics information of the lens unit 12 using an arbitrary method. For example, the outline enhancement strength selection unit 54 (body controller 28) may acquire the optical characteristics information of the lens unit 12 through communication with the lens unit controller 20. In addition, as in the modification example shown in Fig. 35, by storing the sharpening strength magnification V0 and V reflecting the individual differences information Q (an example of optical characteristics information) in the outline enhancement strength list storage unit 60, "acquisition of optical characteristics information" and "determination of the sharpening strength magnification V0 and V based on optical characteristics information" may be simultaneously performed, and the sharpening strength magnification V0 and V may be supplied to an automatic strength adjustment unit 52-10 from the outline enhancement strength selection unit 54.

In imaging devicees to which the embodiments described in this specification are applied, more effects of the present invention are obtained for an imaging device including no optical low pass filter. This is because the resolution of the subject image increases to increase the contrast of the focus region and a quasi-focus region is likely to be generated by providing no optical low pass filter.

In addition, each functional configuration described above can be appropriately realized by any hardware, software, or combination of both hardware and software. For example, the present invention can also be applied to a program causing a computer to execute an image processing method (image processing procedure) in each of the above-described devices and processing units (the body controller 28, the device control unit 34, and the image processing unit 35), a computer-readable recording medium (non-transitory recording medium) in which the image processing program is recorded, or a computer in which the image processing program can be installed.

In addition, applicable forms of the present invention are not limited to the digital camera and the computer (server), and the present invention can be applied not only to cameras having an imaging function as a main function but also to mobile devices having an imaging function and other functions (a call function, a communication function, other computer functions) other than the imaging function. As other forms to which the present invention can be applied, for example, a mobile phone or a smartphone having a camera function, a personal digital assistant (PDA), and a portable game machine can be mentioned. Hereinafter, an example of the smartphone to which the present invention can be applied will be described.

<The configuration of a smartphone>

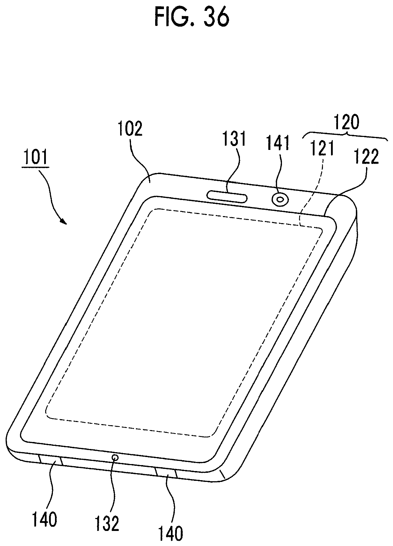

Fig. 36 is a diagram showing the appearance of a smartphone 101 that is an embodiment of the imaging device of the present invention. The smartphone 101 shown in Fig. 36 includes a plate-shaped housing 102. On one surface of the housing 102, a display input unit 120 is provided in which a display panel 121 as a display unit and an operation panel 122 as an input unit are integrated. The housing 102 includes a speaker 131, a microphone 132, an operation unit 140, and a camera unit 141. The configuration of the housing 102 is not limited to this. For example, it is possible to adopt a configuration in which a display unit and an input unit are separated from each other, or it is possible to adopt a configuration having a folded structure or a sliding mechanism.

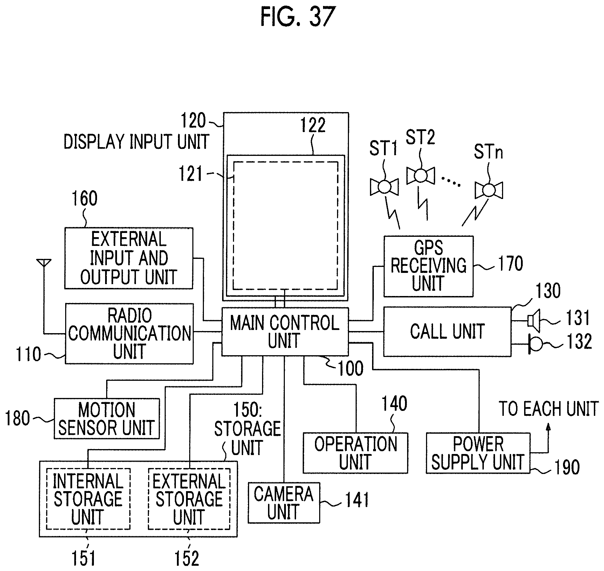

Fig. 37 is a block diagram showing the configuration of the smartphone 101 shown in Fig. 36. As shown in Fig. 37, a radio communication unit 110, the display input unit 120, a call unit 130, the operation unit 140, the camera unit 141, a storage unit 150, an external input and output unit 160, a global positioning system (GPS) receiving unit 170, a motion sensor unit 180, a power supply unit 190, and a main control unit 100 are provided as main components of the smartphone. As a main function, the smartphone 101 has a radio communication function for performing mobile radio communication through a base station BS and a mobile communication network NW.

The radio communication unit 110 performs radio communication with the base station BS accommodated in the mobile communication network NW according to the instruction of the main control unit 100. By using the radio communication, various kinds of file data such as audio data and image data, electronic mail data, and the like are transmitted and received, or Web data, streaming data, and the like are received.

The display input unit 120 is a so-called touch panel that displays images (a still image and a moving image), character information, and the like in order to visually transmit the information to the user and detects a user operation on the displayed information under the control of the main control unit 100, and includes the display panel 121 and the operation panel 122.

In the display panel 121, a liquid crystal display (LCD), an organic electro-luminescence display (OELD), or the like is used as a display device. The operation panel 122 is a device that is placed so that an image displayed on the display surface of the display panel 121 is visible and that detects one or more coordinates operated by a user's finger or a stylus. If the device is operated by a user's finger or a stylus, a detection signal generated due to the operation is output to the main control unit 100. Then, the main control unit 100 detects an operation position (coordinates) on the display panel 121 based on the received detection signal.

As shown in Fig. 36, the display panel 121 and the operation panel 122 of the smartphone 101 illustrated as an embodiment of the imaging device of the present invention are integrated to form the display input unit 120. However, the operation panel 122 is disposed so as to completely cover the display panel 121. In a case where such an arrangement is adopted, the operation panel 122 may have a function of detecting a user operation even in a region outside the display panel 121. In other words, the operation panel 122 may include a detection region of an overlapping portion that overlaps the display panel 121 (hereinafter, referred to as a display region) and a detection region of the other outer edge portion that does not overlap the display panel 121 (hereinafter, referred to as a non-display region).

Although the size of the display region and the size of the display panel 121 may be completely the same, the size of the display region and the size of the display panel 121 may not necessarily be the same. The operation panel 122 may include two sensitive regions of an outer edge portion and the other inner portion. The width of the outer edge portion may be appropriately designed according to the size of the housing 102 or the like. In addition, as a position detection method adopted in the operation panel 122, a matrix switch method, a resistance film method, a surface acoustic wave method, an infrared method, an electromagnetic induction method, an electrostatic capacitance method, and the like can be mentioned, and it is possible to adopt any of the methods.

The call unit 130 includes the speaker 131 or the microphone 132. The call unit 130 converts the voice of the user, which is input through the microphone 132, into audio data that can be processed by the main control unit 100, and outputs the audio data to the main control unit 100. Alternatively, the call unit 130 decodes audio data received by the radio communication unit 110 or the external input and output unit 160, and outputs the audio data from the speaker 131. For example, as shown in Fig. 36, the speaker 131 and the microphone 132 can be mounted on the same surface as a surface on which the display input unit 120 is provided.

The operation unit 140 is a hardware key using a key switch or the like, and receives an instruction from the user. For example, as shown in Fig. 36, the operation unit 140 is a push button type switch that is mounted on the side surface of the housing 102 of the smartphone 101 and that is turned on when pressed with a finger or the like and is turned off by the restoring force of the spring or the like when the finger is released.

The storage unit 150 stores a control program or control data of the main control unit 100, application software, address data in which the name, telephone number, and the like of the communications partner are associated with each other, transmitted or received e-mail data, Web data downloaded by Web browsing, or downloaded content data, and temporarily stores streaming data or the like. In addition, the storage unit 150 is formed by an internal storage unit 151 built in the smartphone and an external storage unit 152 having a detachable external memory slot. Each of the internal storage unit 151 and the external storage unit 152 that form the storage unit 150 is realized using storage media, such as a flash memory type memory, a hard disk type memory, a multimedia card micro type memory, a card type memory (for example, a MicroSD (registered trademark) memory), a random access memory (RAM), and a read only memory (ROM).

The external input and output unit 160 plays a role of interface with all external devices connected to the smartphone 101, and is directly or indirectly connected to other external devices through communication (for example, a universal serial bus (USB) or IEEE 1394) or a network (for example, the Internet, wireless LAN, Bluetooth (registered trademark), radio frequency identification (RFID), infrared data association (IrDA; registered trademark), Ultra Wideband (UWB; registered trademark), or ZigBee (registered trademark)).

Examples of the external device connected to the smartphone 101 include a wired/wireless headset, wired/wireless external charger, wired/wireless data port, a memory card or a subscriber identity module (SIM)/user identity module (UIM) card connected through a card socket, an external audio video device connected through an audio video input/output (I/O) terminal, an external audio video device that is wirelessly connected, a smartphone that is connected in a wired/wireless manner, a personal computer that is connected in a wired/wireless manner, a PDA that is connected in a wired/wireless manner, and an earphone. Through the external input and output unit, data received from such an external device may be transmitted to each component inside the smartphone 101, or data inside the smartphone 101 may be transmitted to the external device.

The GPS receiving unit 170 receives GPS signals transmitted from GPS satellites ST1 to STn, performs positioning calculation processing based on the plurality of received GPS signals, and detects a position including the latitude, longitude, and altitude of the smartphone 101, according to the instruction of the main control unit 100. In a case where position information can be acquired from the radio communication unit 110 or the external input and output unit 160 (for example, a wireless LAN), the GPS receiving unit 170 can detect the position using the position information.

The motion sensor unit 180 includes, for example, a three-axis acceleration sensor, and detects the physical movement of the smartphone 101 according to the instruction of the main control unit 100. By detecting the physical movement of the smartphone 101, the movement direction or acceleration of the smartphone 101 is detected. The detection result is output to the main control unit 100.

The power supply unit 190 supplies electric power stored in a battery (not shown) to each unit of the smartphone 101 according to the instruction of the main control unit 100.

The main control unit 100 includes a microprocessor, operates according to the control program or control data stored in the storage unit 150, and performs overall control of the respective units of the smartphone 101. In addition, in order to perform voice communication or data communication through the radio communication unit 110, the main control unit 100 has a mobile communication control function for controlling each unit of the communication system and an application processing function.

The application processing function is realized by the operation of the main control unit 100 according to the application software stored in the storage unit 150. Examples of the application processing function include an infrared communication function for performing data communication with other devices by controlling the external input and output unit 160, an e-mail function for transmission and reception of an e-mail, a Web browsing function for browsing web pages, and the like.

The main control unit 100 has an image processing function of displaying a video on the display input unit 120 based on image data (data of a still image or a moving image), such as received data or downloaded streaming data. The image processing function refers to a function when the main control unit 100 decodes the above-described image data, performs image processing on the decoding result, and displays an image on the display input unit 120.

In addition, the main control unit 100 performs display control of the display panel 121 and operation detection control for detecting a user operation through the operation unit 140 and the operation panel 122.

By the execution of the display control, the main control unit 100 displays an icon for starting application software or a software key, such as a scroll bar, or displays a window for creating an e-mail. The scroll bar refers to a software key for receiving an instruction to move a display portion of, for example, a large image that cannot be fitted in the display region of the display panel 121.

In addition, by the execution of the operation detection control, the main control unit 100 detects a user operation through the operation unit 140, receives an operation on the above-described icon or an input of a character string to the input field of the above-described window through the operation panel 122, or receives a display image scroll request through the scroll bar.

In addition, by the execution of the operation detection control, the main control unit 100 has a touch panel control function for controlling the sensitive region of the operation panel 122 or the display position of a software key by determining whether the operation position of the operation panel 122 is an overlapping portion (display region) that overlaps the display panel 121 or the other outer edge portion (non-display region) that does not overlap the display panel 121.

The main control unit 100 can also detect a gesture operation on the operation panel 122 and execute a function set in advance in response to the detected gesture operation. The gesture operation does not mean a conventional simple touch operation, but means an operation of drawing a trajectory with a finger, an operation of designating a plurality of positions simultaneously, or an operation of drawing a trajectory for at least one of the plurality of positions by combining these.

The camera unit 141 is a digital camera that performs electronic imaging using an imaging element, such as a CMOS. In addition, the camera unit 141 can convert image data obtained by imaging into compressed image data, for example, JPEG image data, and can record the compressed image data in the storage unit 150 or output the compressed image data through the external input and output unit 160 or the radio communication unit 110, under the control of the main control unit 100. In the smartphone 101 shown in Fig. 36, the camera unit 141 is mounted on the same surface as the display input unit 120. However, the mounting position of the camera unit 141 is not limited thereto, and the camera unit 141 may be mounted on the back of the display input unit 120 or a plurality of camera units 141 may be mounted. In a case where a plurality of camera units 141 are mounted, it is possible to perform imaging using only one camera unit 141 provided for the imaging by switching the camera units 141, or it is possible to perform imaging using the plurality of camera units 141 simultaneously.

The camera unit 141 can be used for various functions of the smartphone 101. For example, an image acquired by the camera unit 141 can be displayed on the display panel 121, or an image of the camera unit 141 can be used as one of the operation inputs of the operation panel 122. In addition, when the GPS receiving unit 170 detects a position, it is possible to detect the position with reference to the image from the camera unit 141. By referring to the image from the camera unit 141, it is also possible to determine the direction of the optical axis of the camera unit 141 of the smartphone 101 or to determine the current use environment without using a three-axis acceleration sensor or in combination with the three-axis acceleration sensor. Needless to say, it is also possible to use the image from the camera unit 141 in the application software.

In addition, position information acquired by the GPS receiving unit 170, audio information (may be text information obtained by performing audio/text conversion with the main control unit or the like) acquired by the microphone 132, posture information acquired by the motion sensor unit 180, and the like can be added to the image data of a still image or a motion picture, and the result can be recorded in the storage unit 150 or can be output through the external input and output unit 160 or the radio communication unit 110.

The above image processing unit 35 (the sharpness restoration control unit 37, the restoration processing unit 38, and the outline enhancement processing unit 39: refer to Fig. 3) can be realized by the main control unit 100, for example.

Explanation of References

| | |
|---|---|
| 10: | digital camera |
| 12: | lens unit (optical system) |
| 14: | camera body |
| 16: | lens |
| 18: | optical system operation unit |
| 20: | lens unit controller |
| 21: | lens unit storage unit |
| 22: | lens unit input and output unit |
| 26: | imaging element |
| 28: | body controller |
| 29: | user interface |
| 30: | camera body input and output unit |
| 31: | main body storage unit |
| 32: | input and output interface |
| 34: | device control unit |
| 35: | image processing unit |
| 37, 37-2 to 37-10: | sharpness restoration control unit |
| 38: | restoration processing unit |
| 39: | outline enhancement processing unit |
| 42: | point image restoration filter processing unit |
| 43: | restoration multiplier |
| 44: | restoration adder |
| 46: | outline enhancement filter processing unit |

| | |
|---|---|
| 47: | sharpening multiplier |
| 48: | sharpening adder |
| 52, 52-2 to 52-10: | automatic strength adjustment unit |
| 53: | restoration filter selection unit |
| 54: | outline enhancement strength selection unit |
| 58: | restoration filter storage unit |
| 60: | outline enhancement strength list storage unit |
| 61: | first adder |
| 62: | second adder |
| 63: | sharpness restoration adjusting unit |
| 65: | non-linear processing unit |
| 67: | point image restoration strength list storage unit |
| 69: | restoration rate selection unit |
| C: | imaging setting conditions |
| G: | point image restoration rate |
| U: | restoration strength magnification |
| V: | sharpening strength magnification |
| X: | restoration filter |
| M: | imaging mode information |
| Q: | individual differences information |

**Claims**

1. An image processing device that acquires restored image data by performing restoration processing using a restoration filter based on a point spread function of an optical system for original image data acquired by capturing a subject image using the optical system, comprising:

    a restoration processing unit that performs the restoration processing by applying the restoration filter to the original image data;
    a sharpness restoration control unit that is able to adjust a restoration rate of the original image data according to the restoration processing by controlling the restoration processing unit; and
    a quasi-focus region detection unit that detects a quasi-focus region in an original image corresponding to the original image data,

    wherein the sharpness restoration control unit adjusts the restoration rate for original image data of the quasi-focus region so as to be smaller than a restoration rate for original image data of at least a focus region.

2. The image processing device according to claim 1,

    wherein, when adjusting the restoration rate for the original image data of the quasi-focus region, the sharpness restoration control unit continuously changes a restoration rate of a boundary between the focus region and the quasi-focus region.

3. The image processing device according to claim 1,

    wherein the quasi-focus region detection unit includes a first defocus amount detection unit that detects a defocus amount of a quasi-focus region in the original image data, and
    the sharpness restoration control unit adjusts the restoration rate for the original image data of the quasi-focus region according to the defocus amount detected by the first defocus amount detection unit.

4. The image processing device according to claim 1, further comprising:

    a sharpening processing unit that performs sharpening processing using a sharpening filter for the original image data,
    wherein the sharpness restoration control unit adjusts a restoration rate of original image data of the quasi-focus region according to the restoration processing and a sharpening rate of original image data of the quasi-focus region according to the sharpening processing by controlling the restoration processing unit and the sharpening processing unit.

**5.** The image processing device according to claim 4,

wherein the sharpness restoration control unit calculates, from a total sharpness restoration rate based on the restoration rate and the sharpening rate and one of the restoration rate and the sharpening rate, the other one of the restoration rate and the sharpening rate.

**6.** The image processing device according to claim 4 or 5,

wherein, when adjusting the restoration rate and the sharpening rate for the original image data of the quasi-focus region, the sharpness restoration control unit continuously changes a restoration rate and a sharpening rate of a boundary between the focus region and the quasi-focus region.

**7.** The image processing device according to claim 4 or 5,

wherein the quasi-focus region detection unit includes a first defocus amount detection unit that detects a defocus amount of a quasi-focus region in the original image data, and
the sharpness restoration control unit adjusts the restoration rate and the sharpening rate for the original image data of the quasi-focus region according to the defocus amount detected by the first defocus amount detection unit.

**8.** The image processing device according to any one of claims 1 to 7,

wherein the original image data is video data including a plurality of frames, and
when adjusting the restoration rate for each of pieces of original image data forming the video data, the sharpness restoration control unit adjusts the restoration rate according to imaging conditions of a previous frame or a subsequent frame with respect to original image data to be processed.

**9.** The image processing device according to any one of claims 1 to 8,

wherein the optical system is a replaceable lens that is replaceably attached to an imaging body in which an imaging element, from which the original image data is read out, is mounted.

**10.** The image processing device according to claim 9,

wherein the sharpness restoration control unit acquires optical characteristics information of the replaceable lens from the mounted replaceable lens.

**11.** The image processing device according to any one of claims 1 to 10,

wherein the quasi-focus region detection unit includes a frequency component extraction unit that extracts a specific frequency component corresponding to quasi-focus or frequency components near the specific frequency including the specific frequency, for each separate region in the original image, based on the original image data, and detects a quasi-focus region in the original image based on a magnitude of the frequency component extracted for each separate region in the original image.

**12.** The image processing device according to claim 11,

wherein the frequency component extraction unit includes an edge portion detection unit that detects an edge portion in the separate region for each separate region in the original image, and extracts a specific frequency component corresponding to quasi-focus or frequency components near the specific frequency including the specific frequency, for each separate region in the original image, based on original image data of the detected edge portion.

**13.** The image processing device according to claim 11 or 12,

wherein, assuming that a sampling frequency of the original image data is fs, the frequency component extraction unit extracts a frequency component in a range of 0.05 fs to 0.25 fs for each separate region in the original image, and

assuming that a response of a focus region is 1, the quasi-focus region detection unit detects a quasi-focus region in the original image according to whether or not a magnitude of the frequency component extracted for each separate region in the original image falls within a range between a lower limit and an upper limit corresponding to responses of 0.2 and 0.7, respectively.

14. The image processing device according to any one of claims 1 to 13, further comprising:

an acquisition unit that acquires a subject distance for each separate region in an original image corresponding to the original image data and imaging conditions at the time of imaging of the original image data,

wherein the quasi-focus region detection unit detects a quasi-focus region in the original image based on the acquired subject distance for each region in an imaging range and a depth of field determined by the acquired imaging conditions.

15. An imaging device, comprising:

the image processing device according to any one of claims 1 to 10;
an imaging unit that acquires the original image data by capturing a subject image using the optical system; and
a second defocus amount detection unit that detects defocus amounts of all regions in an imaging range of the imaging unit,

wherein the quasi-focus region detection unit detects a quasi-focus region in the original image based on the defocus amounts of all regions in the imaging range detected by the second defocus amount detection unit.

16. An imaging device comprising the image processing device according to any one of claims 1 to 14.

17. An image processing method of acquiring restored image data by performing restoration processing using a restoration filter based on a point spread function of an optical system for original image data acquired by capturing a subject image using the optical system, the method comprising:

a step of performing the restoration processing by applying the restoration filter to the original image data;
a step of adjusting a restoration rate of the original image data according to the restoration processing; and
a step of detecting a quasi-focus region in an original image corresponding to the original image data,

wherein, in the step of adjusting the restoration rate, the restoration rate for original image data of the quasi-focus region is adjusted so as to be smaller than a restoration rate for original image data of at least a focus region.

18. An image processing program for acquiring restored image data by performing restoration processing using a restoration filter based on a point spread function of an optical system for original image data acquired by capturing a subject image using the optical system, the program causing a computer to execute:

a step of performing the restoration processing by applying the restoration filter to the original image data;
a step of detecting a quasi-focus region in an original image corresponding to the original image data; and
a step of adjusting a restoration rate of the original image data according to the restoration processing, which is a step of adjusting the restoration rate for original image data of the detected quasi-focus region so as to be smaller than a restoration rate for original image data of at least a focus region.

FIG. 1

## FIG. 2

28

```
CAMERA BODY CONTROLLER
```

34                              35

| DEVICE CONTROL UNIT | IMAGE PROCESSING UNIT |
| --- | --- |

## FIG. 3

35

```
IMAGE PROCESSING UNIT
```

37

SHARPNESS RESTORATION CONTROL UNIT

38

RESTORATION PROCESSING UNIT

FIG. 4

28(35)

# FIG. 5

## FIG. 6A

FOCUS REGION

## FIG. 6B

QUASI-FOCUS
REGION

## FIG. 6C

DEFOCUS REGION

## FIG. 7

## FIG. 8

## FIG. 9

| SFR | BPF1 (0.05~0.25 $f_s$) | BPF2 (CENTER FREQUENCY 1/8 $f_s$) |
|---|---|---|
| 1.0 | A | a |
| 0.7 | B | b |
| 0.2 | C | c |

# FIG. 10

# FIG. 11

## FIG. 12

RESTORATION STRENGTH
MAGNIFICATION U

d

a

c

b

b

0.2    0.7    1.0

DEFOCUS
REGION

QUASI-FOCUS
REGION

FOCUS
REGION

RESPONSE

## FIG. 13

$A_{11}$    $A_{14}$    $A_{18}$

$A_{81}$    $A_{84}$    $A_{88}$

## FIG. 14

$A_{11}$

$A_{12}$

$A_{44}$

$A_{88}$

CLOSE    FOCUS POSITION    INFINITY

[LENS POSITION]

## FIG. 15

SUBJECT DISTANCE

FOCUS POSITION

IMAGE POSITION

$A_{14}$  $A_{24}$  $A_{34}$  $A_{44}$  $A_{54}$  $A_{64}$  $A_{74}$  $A_{84}$

A
B
C

## FIG. 16

| A | QUASI-FOCUS REGION | | 118～154cm |
|---|---|---|---|
| B | FOCUS REGION | REAR DEPTH OF FIELD | 18cm |
| | | FOCUS POSITION | 100cm |
| | | FRONT DEPTH OF FIELD | 13cm |
| C | QUASI-FOCUS REGION | | 61～87cm |

## FIG. 17

50-2

50-2a

50-2c

INPUT IMAGE

SUBJECT DISTANCE ACQUISITION UNIT (FOR EACH SEPARATE REGION)

DETERMINATION UNIT

IMAGING CONDITIONS

DEPTH-OF-FIELD CALCULATION UNIT

50-2b

QUASI-FOCUS REGION DETECTION UNIT

FIG. 18A                    FIG. 18B

p1                                          p2

L: MICROLENS                                L

CF: COLOR FILTER                            CF

27A                    27A        27B        27B

27A                                          27B

PD                                           PD

FIG. 19

50-3

50-3a                50-3b

INPUT IMAGE → DEFOCUS AMOUNT DETECTION UNIT → DETERMINATION UNIT →

QUASI-FOCUS REGION DETECTION UNIT

# FIG. 20

35-2

IMAGE PROCESSING UNIT

37-2

SHARPNESS RESTORATION
CONTROL UNIT

38

RESTORATION
PROCESSING UNIT

39

OUTLINE ENHANCEMENT
PROCESSING UNIT

# FIG. 21

TOTAL SHARPNESS
RESTORATION STRENGTH

POINT IMAGE
RESTORATION
STRENGTH

B

SHARPNESS
STRENGTH

## FIG. 22

28(35)

INPUT IMAGE

| 38 | 39 |
| --- | --- |

44

OUTPUT IMAGE

43

POINT IMAGE RESTORATION FILTER PROCESSING UNIT

42

48

47

OUTLINE ENHANCEMENT FILTER PROCESSING UNIT

46

G — POINT IMAGE RESTORATION RATE

U

52-2

V

AUTOMATIC STRENGTH ADJUSTMENT UNIT

50 — QUASI-FOCUS REGION DETECTION UNIT

X

V0

37-2

S — IMAGING SETTING CONDITIONS

RESTORATION FILTER SELECTION UNIT

OUTLINE ENHANCEMENT STRENGTH SELECTION UNIT

X — 53

V0 — 54

RESTORATION FILTER STORAGE UNIT

OUTLINE ENHANCEMENT STRENGTH LIST STORAGE UNIT

58

60

EP 3 125 527 A1

FIG. 23

## FIG. 24

EP 3 125 527 A1

EP 3 125 527 A1

FIG. 25A

FIG. 25B

FIG. 25C

GAIN

FREQUENCY

GAIN

FREQUENCY

GAIN

$g0$

$f0$ FREQUENCY

ADJUSTMENT EXAMPLE 1

ADJUSTMENT EXAMPLE 2

# FIG. 26

28(35)

INPUT IMAGE

OUTPUT IMAGE

63

62

38

42

43

61

POINT IMAGE
RESTORATION FILTER
PROCESSING UNIT

U

37

52

AUTOMATIC
STRENGTH
ADJUSTMENT
UNIT

47

OUTLINE
ENHANCEMENT FILTER
PROCESSING UNIT

V

46

39

EP 3 125 527 A1

FIG. 27

FIG. 28

28(35)

INPUT IMAGE → ... → OUTPUT IMAGE

38

44

43

POINT IMAGE RESTORATION FILTER PROCESSING UNIT

42

39

48

47

OUTLINE ENHANCEMENT FILTER PROCESSING UNIT

46

U

52-7

V

G — POINT IMAGE RESTORATION RATE

AUTOMATIC STRENGTH ADJUSTMENT UNIT

M — IMAGING MODE INFORMATION

50 — QUASI-FOCUS REGION DETECTION UNIT

X

V0

37-7

S — IMAGING SETTING CONDITIONS

RESTORATION FILTER SELECTION UNIT

OUTLINE ENHANCEMENT STRENGTH SELECTION UNIT

X — 53

V0 — 54

RESTORATION FILTER STORAGE UNIT

58

OUTLINE ENHANCEMENT STRENGTH LIST STORAGE UNIT

60

EP 3 125 527 A1

59

# FIG. 29

| t-3 | t-2 | t-1 | t | t+1 | t+2 | t+3 |
|-----|-----|-----|---|-----|-----|-----|

.... [t-3] [t-2] [t-1] [t] [t+1] [t+2] [t+3] ....

PREVIOUS FRAMES     PROCESSING TARGET FRAME     SUBSEQUENT FRAMES

→ TIME SERIES

EP 3 125 527 A1

## FIG. 30

| FRAME | F NUMBER | |
|---|---|---|
| FRAME (t-3) | F2 | → RESTORATION PROCESSING (F2 FILTER) |
| FRAME (t-2) | F2 | → RESTORATION PROCESSING (F2 FILTER) |
| FRAME (t-1) | F2 | → RESTORATION PROCESSING (F2 FILTER) |
| FRAME ( t ) | F2.8 | |
| FRAME (t+1) | F2 | |
| FRAME (t+2) | F2 | |
| FRAME (t+3) | F2 | |

## FIG. 31

| FRAME | F NUMBER | |
|---|---|---|
| FRAME (t-3) | F2 | |
| FRAME (t-2) | F2 | |
| FRAME (t-1) | F2 | |
| FRAME ( t ) | F2.8 | → RESTORATION PROCESSING (F2 FILTER) |
| FRAME (t+1) | F1.4 | |
| FRAME (t+2) | F1.4 | → RESTORATION PROCESSING (F1.4 FILTER) |
| FRAME (t+3) | F1.4 | |

## FIG. 32

START

ACQUIRE IMAGING CONDITIONS OF
PROCESSING TARGET FRAME — S10

ACQUIRE IMAGING CONDITIONS OF
REFERENCE FRAMES — S12

EXTRACT IMAGING
CONDITIONS OF MODE — S14

S16

IS THERE
A PLURALITY OF
MODES?

No

Yes

S20

IS ONE OF
MODES IMAGING CONDITIONS OF
PROCESSING TARGET FRAME?

No

Yes

S22

SELECT IMAGING CONDITIONS OF
FRAME HAVING SHORT INTERVAL
IN TIME SERIES WITH RESPECT
TO PROCESSING TARGET FRAME
(SELECT PREVIOUS FRAME
IN TIME SERIES IN A CASE
WHERE INTERVAL IS THE SAME)

S18

IMAGING CONDITIONS OF
MODE ARE ADOPTED

IMAGING CONDITIONS OF
PROCESSING TARGET FRAME
ARE ADOPTED — S24

RETURN

# FIG. 33

EP 3 125 527 A1

FIG. 34

# FIG. 35

EP 3 125 527 A1

FIG. 36

FIG. 37

## INTERNATIONAL SEARCH REPORT

| | International application No. |
|---|---|
| | PCT/JP2015/054407 |

### A. CLASSIFICATION OF SUBJECT MATTER
*H04N5/232*(2006.01)i, *G06T5/00*(2006.01)i, *G06T5/20*(2006.01)i, *H04N1/409* (2006.01)i

According to International Patent Classification (IPC) or to both national classification and IPC

### B. FIELDS SEARCHED

Minimum documentation searched (classification system followed by classification symbols)
H04N5/232, G06T5/00, G06T5/20, H04N1/409

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2006-129236 A (Sanyo Electric Co., Ltd.), 18 May 2006 (18.05.2006), abstract; paragraph [0086]; fig. 10 & US 2006/0093233 A1 & CN 1783939 A | 1-18 |
| A | WO 2010/131296 A1 (Toshiba Corp.), 18 November 2010 (18.11.2010), paragraphs [0045] to [0050] (Family: none) | 1-18 |
| A | JP 2001-197356 A (Minolta Co., Ltd.), 19 July 2001 (19.07.2001), paragraph [0096] & US 2001/0008418 A1 | 1-18 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 May 2015 (13.05.15) | 26 May 2015 (26.05.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**EP 3 125 527 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011123589 A
- JP 2011023823 A
- JP 2006129236 A